# EUROPEAN PATENT SPECIFICATION

(11) **EP 4 145 810 B1**
(45) Date of publication and mention of the grant of the patent: **22.04.2026**
(21) Application number: 21857526.4
(22) Date of filing: 09.08.2021
(51) Int. Cl.: H04M 1/02, H04M 1/23, G06F 1/16

(54) **HOUSING ASSEMBLY AND FOLDABLE ELECTRONIC DEVICE**
GEHÄUSEANORDNUNG UND KLAPPBARE ELEKTRONISCHE VORRICHTUNG
ENSEMBLE BOÎTIER ET DISPOSITIF ÉLECTRONIQUE PLIABLE

(30) Priority: 21.08.2020 CN 202010848437
(43) Date of publication of application: 08.03.2023
(73) Proprietor: GUANGDONG OPPO MOBILE TELECOMMUNICATIONS CORP., LTD., Dongguan Guangdong 523860 (CN)
(72) Inventor: LI, Mingyang, Dongguan Guangdong 523860 (CN)
(74) Representative: Mewburn Ellis LLP
(86) International application number: PCT/CN2021/111541
(87) International publication number: WO 2022/037431

(56) References cited:
- CN-A- 1 525 274
- CN-A- 1 719 379
- CN-A- 108 600 464
- CN-A- 111 246 057
- CN-A- 111 953 826
- CN-U- 210 776 375
- US-A1- 2006 007 649
- US-A1- 2008 218 953
- US-B1- 10 606 318

## Description

### TECHNICAL FIELD

This disclosure relates to the technical field of electronic devices, and in particular, to a housing assembly and a foldable electronic device.

### BACKGROUND

Currently, in terminal devices such as a foldable electronic device, cell miniaturization is realized by relatively folding a display screen of the foldable electronic device to facilitate user portability. A housing assembly of a traditional foldable electronic device usually includes a first housing and a second housing pivotally connected with the first housing, and a flexible display screen covering the first housing and the second housing. The first housing and the second housing folded relative to each other are usually locked together via a locking mechanism. Due to limitations of the existing locking mechanism and the housing assembly, the housing assembly usually needs a relatively large thickness to meet stroke requirements of the locking mechanism in a thickness direction of the housing assembly, which is not conducive to realizing a thin and light design of a whole machine.

US2006007649 A1 relates to a latch device for a portable computer and securing a main body to a foldable display. The main body may be folded onto or unfolded with respect to the display about a hinge. The latch device includes a latch installation portion, a latch, an elastic member, and a release mechanism. The latch installation portion is formed on a rear case of the display. The latch is seated in the latch installation portion and includes a hook which passes through a front case of the display and protrudes forward from a front end of the display to be selectively hooked into a catching groove on the main body. The elastic member provides an elastic force in a direction in which the hook of the latch is hooked into the catching groove of the main body. The release mechanism is exposed to the exterior of an end of the display to receive a driving force inputted for moving the latch.

US10606318 B1 relates to a foldable electronic device that including a processor, a memory, a first housing, a second housing, a flexible display, a hinge assembly, and a mode detector assembly.

The first housing includes a first hinge portion. The flexible display is disposed on the first housing and the second housing. The hinge assembly includes a second hinge portion rotatably coupled to the first hinge portion of the first housing. The hinge assembly is configured for providing relative rotation of the first housing with respect to the second housing. The mode detector assembly is configured to detect configurations of the electronic device and configured to generate a signal indicating a change of mode of operation of the display. The mode detector assembly includes at least a flexible connection member and a spring member. The spring member is disposed in the first hinge portion of the first housing or in the second hinge portion of the hinge assembly or in the first hinge portion of the first housing and in the second hinge portion of the hinge assembly. A portion of the flexible connection member is disposed in the first hinge portion of the first housing.

CN210776375U relates to an electronic device, a folding electronic device and a locking mechanism, the electronic device or the folding electronic device comprises a first structural member, a second structural member and the locking mechanism, the locking mechanism is arranged on the first structural member and comprises a switch and a clamping structure; the switch is connected with the clamping structure through a rolling structure; and the second structural part is provided with a bayonet matched with the clamping structure. When the clamping structure is matched with the bayonet, the first structural part and the second structural part are in a locking state; the switch can move by pressing and maintaining pressing of the switch, the rolling structure rolls to drive the clamping structure to retreat from the bayonet, and the first structural part and the second structural part can be in a non-locking state. The rolling structure is arranged between the switch and the clamping structure, so that friction between the rolling structure and the switch and friction between the rolling structure and the clamping structure are rolling friction in the movement process of the switchand the clamping structure, the system friction force of the locking mechanism can be effectively reduced, the smooth switch pressing hand feeling is achieved, and the user experience is improved.

### SUMMARY

Aspects of the invention are set out in the appended claims.

### BRIEF DESCRIPTION OF THE DRAWINGS

To describe the technical solutions in the implementations of the disclosure more clearly, the following briefly introduces the accompanying drawings required for describing the implementations. Apparently, the accompanying drawings in the following description illustrate some implementations of the disclosure. Those of ordinary skill in the art may also obtain other drawings based on these accompanying drawings without creative efforts.
FIG. 1 is a schematic structural view illustrating a housing assembly in an unlocked state provided in an implementation of the disclosure.
FIG. 2 is an exploded schematic structural view of an accommodation mechanism and a locking mechanism of a housing assembly provided in an implementation of the disclosure.
FIG. 3 is a partial cross-sectional view illustrating a housing assembly in a locked state provided in an implementation of the disclosure.
FIG. 4 is a partial cross-sectional view illustrating a housing assembly in an unlocked state provided in an implementation of the disclosure.
FIG. 5 is an exploded schematic structural view of a locking mechanism of the housing assembly provided in an implementation of the disclosure.
FIG. 6 is a partial cross-sectional view illustrating a locking mechanism of another housing assembly in an unlocked state provided in an implementation of the disclosure.
FIG. 7 is a partial cross-sectional view of yet another housing assembly provided in an implementation of the disclosure.
FIG. 8 is a partial enlarged view of circle VIII in FIG. 7.
FIG. 9 is a partial cross-sectional view of a locking mechanism of a still yet another housing assembly in an unlocked state provided in an implementation of the disclosure.
FIG. 10 is a schematic structural view illustrating a foldable electronic device in a folded state provided in an implementation of the disclosure.
FIG. 11 is a partial cross-sectional view of a foldable electronic device provided in an implementation of the disclosure.
FIG. 12 is a schematic structural view illustrating a housing assembly in an unlocked state provided in another implementation of the disclosure.
FIG. 13 is an exploded schematic structural view of an accommodating mechanism and a locking mechanism of a housing assembly provided in another implementation of the disclosure.
FIG. 14 is a partial cross-sectional view of a housing assembly in a locked state provided in another implementation of the disclosure.
FIG. 15 is a partial cross-sectional view of a housing assembly in a locked state provided in another implementation of the disclosure.

### DETAILED DESCRIPTION

The technical solutions in the implementations of the disclosure are clearly and completely described in the following with reference to the accompanying drawings in the implementations of the disclosure to make those skilled in the art better understand the technical solutions of the disclosure. Apparently, the described implementations are merely part rather than all of the implementations of the disclosure. All other implementations obtained by those of ordinary skill in the art based on the implementations of the disclosure without creative efforts are within the scope of the disclosure.

A current foldable electronic device is usually provided with two housings which are foldable relative to each other, and a locking structure is provided between the two housings, so that the two housings may be locked to fix in a folded state when the two housings are in a folded state.

An existing housing assembly usually includes two housings (for example, a first housing and a second housing) and a locking mechanism provided in one of the two housings (for example, the first housing). The locking mechanism is usually provided in the first housing in a thickness direction of the first housing. The locking mechanism includes a button, and the button is usually disposed at a rear surface of the first housing away from a user in the thickness direction of the first housing, where the button can extend out of or retract into the first housing. In the existing structural design, the first housing is required to have a sufficient thickness to meet a stroke of the button generated when the button extends out of or retract into the first housing. However, a relatively thick housing is not conducive to realizing a thin and light design of a whole machine. In view of above technical problems, the applicant of the disclosure proposes a housing assembly and a foldable electronic device to solve at least the above problems.

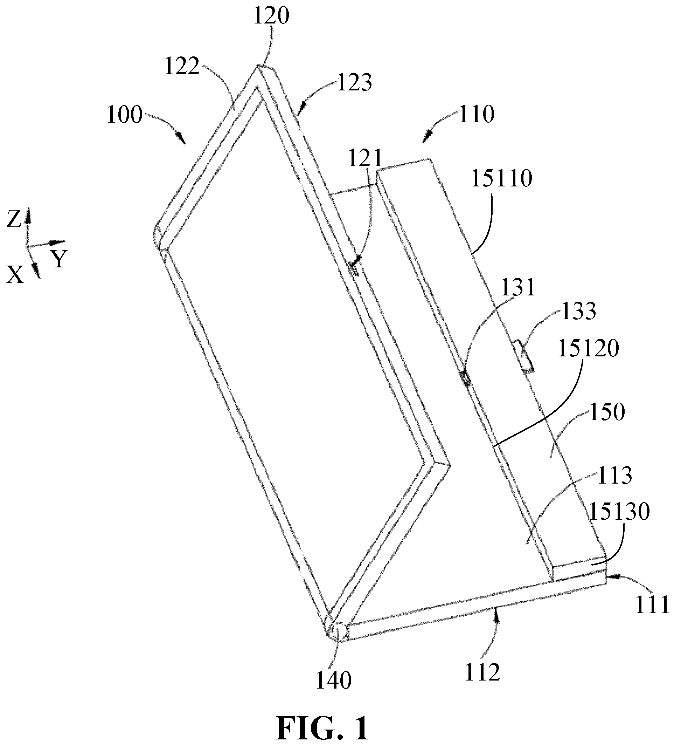

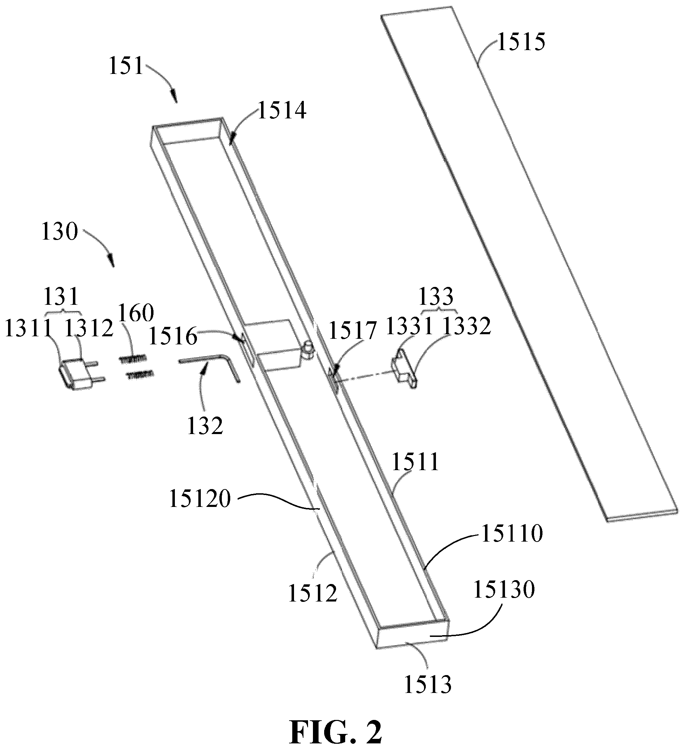

Refer to FIG. 1 and FIG. 2, a housing assembly 100 is provided in an implementation of the disclosure, which is an embodiment of the invention. The housing assembly 100 includes a first housing 110, a locking mechanism 130 disposed at the first housing 110, and a second housing 120. The locking mechanism 130 is configured to lock the first housing 110 and the second housing 120 when the first housing 110 and the second housing 120 are folded relative to each other.

The first housing 110 includes a side wall 111, a first surface 112, and a second surface 113 opposite the first surface 112. The side wall 111 is connected between the first surface 112 and the second surface 113. In the implementation, the first housing 110 has a substantially rectangular structure. A length direction of the first housing 110 is defined as length direction X, a width direction of the first housing 110 is defined as width direction Y, and the thickness direction of the first housing 110 is defined as thickness direction Z (as illustrated in FIG. 1). The length direction X is substantially parallel to a long side of the first housing 110, and the width direction Y is substantially parallel to a short side of the second housing 120, where the short side is shorter than the long side. The thickness direction Z is substantially perpendicular to a plane where the long side and the short side of the first housing 110 are located. The first surface 112 and the second surface 113 of the first housing 110 are arranged in the thickness direction Z and opposite to each other. The side wall 111 is connected between the first surface 112 and the second surface 113. The side wall 111 includes a sidewall portion extending in the length direction X and a sidewall portion extending in the width direction, where the sidewall portion extending in the length direction X is longer than the sidewall portion extending in the width direction Y. The first housing 110 may be made of metal, plastic, and other materials.

In the housing assembly 100 provided in the implementations of the disclosure, a side button is movably disposed at the side wall 111 of the first housing 100, and thus a breakdown in an integrity of the second surface 113 can be avoided due to absence of a hole defined on the second surface 113 of the first housing 110, and the thickness of the first housing 110 is not required to additionally increase to meet the stroke of the side button 111 generated when the side button 111 extends out of or retract into the first housing 110, which is beneficial to reducing the thickness of the whole machine and realizing a thin design.

Refer to FIG. 1 and FIG. 2 again, in the implementation, the first housing 110 may include an accommodating mechanism 150. The accommodating mechanism 150 may be disposed at an end of the second surface 113 away from a junction between the first housing 110 and the second housing 120, and protrudes toward a direction away from the first surface 112. Further, the accommodating mechanism 150 may be disposed at the end of the second surface 113 away from the junction between the first housing 110 and the second housing 120 and adjacent to an edge of the first housing 110. The accommodating mechanism 150 is flush with the second housing 120 when the second housing 120 and the first housing are folded relative to each other. The accommodating mechanism 150 may have a substantially rectangular structure, and the accommodating mechanism 150 defines an accommodating cavity 1514 (which will be described in detail hereinafter), which may be used to accommodate the locking mechanism 130, some electronic components, or the like. The electronic components accommodated in the accommodating cavity 1514 can include, for example, a functional module that includes any one or a combination of the following modules: an image capture module, a fingerprint recognition module, an iris recognition module, a data connection module, a receiver module, a speaker module, etc. A surface of the accommodating mechanism 150 away from the second surface 113 (i.e, a surface of the accommodating mechanism 150 that is flush with a surface of the second housing 120 facing the user when the first housing 110 and the second housing 120 are folded relative to each other) may be implemented as a mirror surface, for example a glass mirror surface, and thus the whole machine has a relatively concise appearance.

The above-mentioned functional module and the locking mechanism 130 are disposed in the accommodating mechanism 150 that is relatively protruding, so that thicknesses of other components such as the first housing 110 and the second housing 120 can be avoided from being limited by a thickness of the functional module, and thus the thicknesses of the other components such as the first housing 110 and the second housing 120 can be appropriately reduced to facilitate the thin design of the foldable electronic device.

In the implementation, a length direction of the accommodating mechanism 150 may be substantially the same as the length direction X, and a length of the accommodating mechanism 150 may be substantially equal to a length of the first housing 110. Specifically, the accommodating mechanism 150 may include a frame body 151. The frame body 151 may have a substantially rectangular frame structure. The frame body 151 may be disposed on the second surface 113 and adjacent to the long side of the second surface 113. The frame body 151 may include a first plate body 1511, a second plate body 1512, and two side plates 1513. The first plate body 1511 has a first plate wall 15110, the second plate body 1512 has a second plate wall 15120, and each of the two side plates 1513 has a plate wall 15130. The side wall 111 of the accommodating mechanism 150 includes the first plate wall 15110 and the plate walls 15130. The first plate body 1511 extends in the length direction X. The first plate body 1511 is disposed opposite to the second plate body 1512. A length of the first plate body 1511 is equal to a length of the second plate body 1512, and a length direction of the first plate body 1511 and a length direction of the second plate body 1512 are substantially parallel to the length direction X. When the first housing 110 and the second housing 120 are folded relative to each other, the second housing 120 is adjacent to the second plate body 1512. The two side plates 1513 are disposed opposite to each other in the width direction Y and connected between the first plate body 1511 and the second plate body 1512. The frame body 151 and the second surface 113 cooperatively define the accommodating cavity 1514. In an example, the side wall 111 of the first housing 110 includes the first plate body 1511 and the two side plates 1513, that is, the first plate body 1511 and the two side plates 1513 may also be integrally formed to serve as part of the first housing 110. The accommodating mechanism 150 may further include a cover plate 1515 covering a side of the frame body 151 away from the second surface 113, so that the cover plate 1515 covers the entire accommodating cavity 1514. In other words, the cover plate 1515 covers the first plate body 1511, the second plate body 1512, and the two side plates 1513, and the accommodating cavity 1514 is cooperatively defined by the first plate body 1511, the second plate body 1512, the two side plates 1513, the cover plate 1515, and the second surface 113. When the first housing 110 and the second housing 120 are folded relative to each other, the cover plate 1515 is flush with an outer surface of the second housing 120. The cover plate 1515 may integrally or detachably formed with the frame body 151.

In the implementation, the first plate body 1511 of the accommodating mechanism 150 defines a guide hole 1517 communicating with the accommodating cavity 1514. The second plate body 1512 defines an extension hole 1516 communicating with the accommodating cavity 1514. The guide hole 1517 offsets relative to the extension hole 1516 in the width direction Y, and the guide hole 1517 is not aligned with the extension hole 1516 in the width direction Y. As an example, the guide hole 1517 may be defined in the first plate body 1511. The guide hole 1517 may be a substantially strip-shaped hole. The guide hole 1517 may substantially extend in the length direction X. The extension hole 1516 may be defined in the second plate body 1512, and an axial direction of the extension hole 1516 may be substantially parallel to the width direction Y. The extension hole 1516 may be square, circular, oval, or other shapes.

Refer to FIG. 1 again, in the implementation, the second housing 120 is rotatably connected with the first housing 110 via a shaft mechanism 140, which will be described in detail hereinafter. The second housing 120 and the first housing 110 may be folded or unfolded relative to each other through rotation. The second housing 120 has a third surface 122 and a fourth surface 123 opposite the third surface 122. The third surface 122 may be a surface where a display screen of the second housing 120 is located, that is, the third surface 122 may be a surface of the second housing 120 facing the user. The fourth surface 123 may be a surface of the second housing 120 facing away from the user. When the second housing 120 and the first housing 110 are fully folded, the fourth surface 123 may contact the second surface 113; and meanwhile, the accommodating mechanism 150 may be flush with the second housing 120, that is, the cover plate 1515 of the accommodating mechanism 150 may be flush with the third surface 122 of the second housing 120, so that the folded housing assembly 100 is relatively flat in appearance. The second housing 120 may be made of materials such as metal and plastic. For example, both the second housing 120 and the first housing 110 may be made of stainless steel.

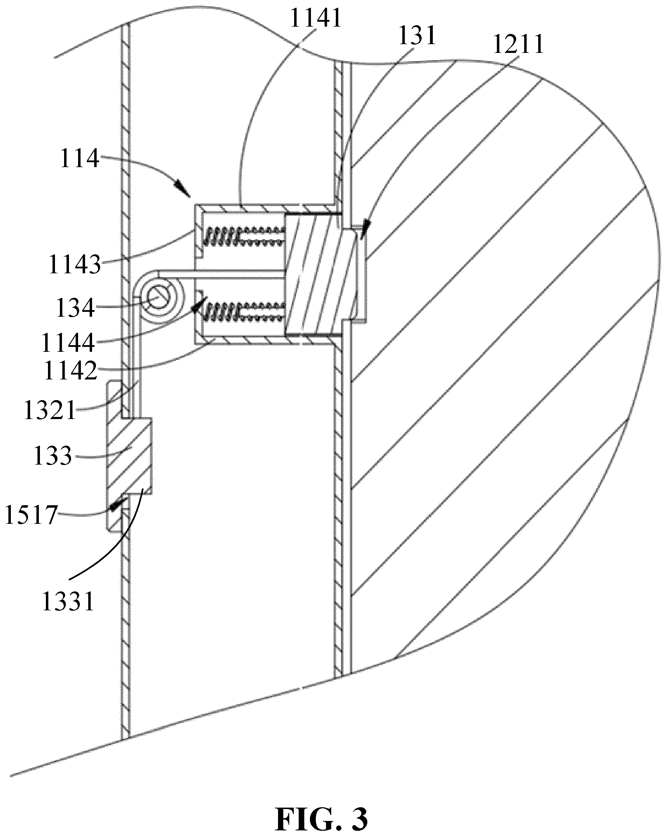

In the implementation, the second housing 120 further includes two side walls extending in the width direction Y and side walls extending in the length direction X, where a length of the side wall extending in the length direction X is greater than a length of each of the two side walls extending in the width direction Y. The second housing 120 is provided with a matching portion 121. The matching portion 121 is configured to be engaged with the locking mechanism 130. The matching portion 121 of the second housing 120 may be a clamping hole 1211 (as illustrated in FIG. 3), and the clamping hole 1211 may be defined in a side wall of the second housing 120 away from the junction between the first housing 110 and the second housing 120. When the second housing 120 and the first housing 110 are fully folded, the clamping hole 1211 faces the extension hole 1516.

Refer to FIG. 1, in the implementation, the housing assembly 100 may further include the shaft mechanism 140 disposed between the first housing 110 and the second housing 120 in the length direction X. The shaft mechanism 140 is connected with a side wall of the first housing 110 extending in the length direction X where the accommodating mechanism 150 is not disposed, and a side wall of the second housing 120 extending in the length direction X where the clamping hole 1211 is not defined. Further, both ends of the shaft mechanism 140 are respectively flush with the side walls of the first housing 110 and the second housing 120 extending in the width direction Y. A length of the shaft mechanism 140 is equal to a length of the side wall of the first housing 110 extending in the length direction X and a length of the side wall of the second housing 120 extending in the length direction X. The first housing 110 may be rotatably connected with the second housing 120 via the shaft mechanism 140. In addition, the first housing 110 may also be rotatably connected with the second housing 120 via a flexible connecting belt. The flexible connecting belt has one end connected with the first housing 110 and the other end connected with the second housing 120. The flexible connecting belt can be bent or extend as the first housing 110 and the second housing 120 are folded or unfolded.

Refer to FIG. 1 and FIG. 2, the locking mechanism 130 includes an engaging portion 131, a transmission portion 132, and the side button 133. The transmission portion 132 is disposed in the accommodating cavity 1514. In the implementation, the side button 133 is movably disposed at the side wall 111, the side button 133 is movably disposed at the side wall 111 of the accommodating mechanism 150. In other words, the side button 133 is movably disposed at the first plate wall 15110 of the first plate body 1511 of the accommodating mechanism 150. In an example, the side button 133 can be slidably disposed at the first plate body 1511 substantially in the length direction X. The transmission portion 132 has one end connected with the side button 133 and the other end connected with the engaging portion 131. The side button 133 is configured to drive the engaging portion 131 to disengage from the matching portion 121 through sliding in the length direction X. Specifically, the side button 133 may be slidably disposed in the guide hole 1517 in the length direction X. The side button 133 may include a guide block 1331 and a button cap 1332. The guide block 1331 is slidably disposed in the guide hole 1517 in the length direction X and connected with the transmission portion 132. The button cap 1332 is connected with the guide block 1331 and located outside the guide hole 1517. In the length direction X, an extension length of the guide hole 1517 is greater than a length of the guide block 1331 and less than a length of the button cap 1332, so that the button cap 1332 can cover the guide hole 1517. In other words, the length of the guide hole 1517 in the length direction X is greater than or equal to a sliding stroke of the side button 133 in the length direction X. When the first housing 110 and the second housing 120 are locked together, the side button 133 can slide a certain stroke in the guide hole 1517 in the length direction X to drive the engaging portion 131 to retract into the accommodating cavity 1514, so that the first housing 110 is disengaged from the second housing 120. The button cap 1332 can be substantially in contact with the first plate body 1511 without affecting a normal sliding of the side button 133.

The button cap 1332 covers the guide hole 1517 to avoid a direct exposure of the guide hole 1517, such that the guide hole 1517 is invisible by the user from the outside of the housing assembly 100. At the same time, the button cap 1332 can be substantially in contact with the first plate body 1511 to avoid a gap between the button cap 1332 and the first plate body 1511, so as to reduce dust and other impurities in the guide hole 1517 and the accommodating cavity 1514 or prevent external dust and other impurities from entering the guide hole 1517 and the accommodating cavity 1514.

In some implementations, the side button 133 may also be disposed at one of the two side plates 1513 of the accommodating mechanism 150. For example, the guide hole 1517 may be defined in one of the side plates 1513. The transmission portion 132 has one end connected with the side button 133 and the other end connected with the engaging portion 131. The side button 133 may be slidably disposed in the guide hole 1517 in the width direction Y, and the side button 133 may slide in the width direction Y to drive the engaging portion 131 to retract into the accommodating cavity 1514, so that the engaging portion 131 is disengaged from the matching portion 121.

Refer to FIG. 2, FIG. 3, and FIG. 4, in the implementation, the transmission portion 132 is received in the accommodating cavity 1514. The transmission portion 132 may include a pulling rope 1321. The pulling rope 1321 includes a pulling segment 1322 and a connecting segment 1323. One end of the pulling segment 1322 is connected with one end of the connecting segment 1323, and the other end of the connecting segment 1323 is connected with the guide block 1331 of the side button 133. Specifically, the other end of the connecting segment 1323 may be connected with a side of the guide block 1331. The other end of the pulling segment 1322 is connected with the engaging portion 131. The pulling rope 1321 can pull the engaging portion 131 to move away from and disengage from the matching portion 121 under a pulling force of the side button 133.

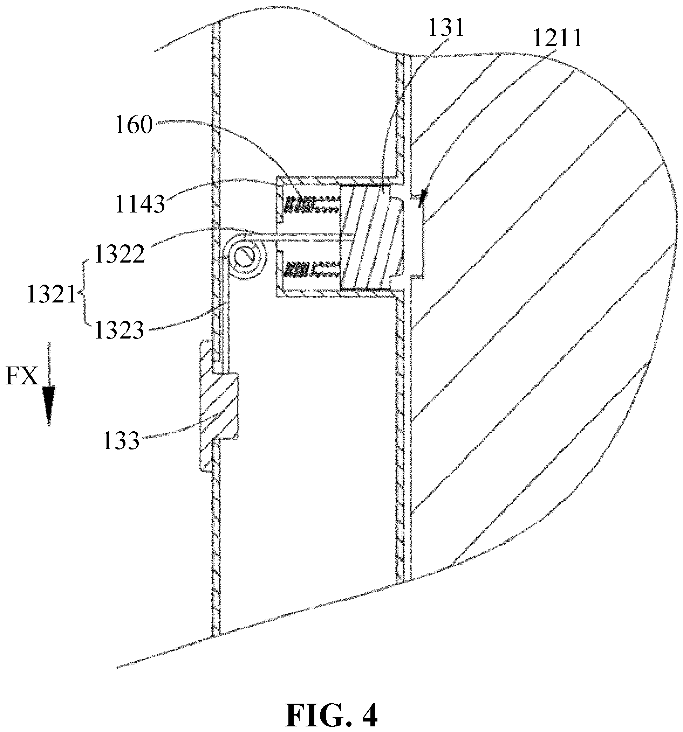

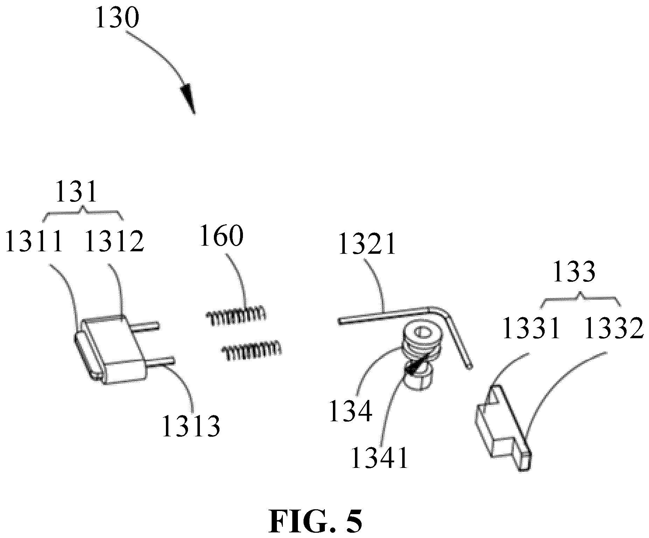

Refer to FIG. 2 and FIG. 5, in the implementation, the engaging portion 131 is received in the accommodating mechanism 150, and can selectively extend out of or retract into the accommodating mechanism 150. Specifically, the engaging portion 131 may be slidably disposed at the second plate body 1512 in the width direction Y. For example, the engaging portion 131 is slidably disposed in the extension hole 1516 of the second plate body 1512 in the width direction Y, so that the engaging portion 131 can selectively extend out through the extension hole 1516 or retract into the accommodating cavity 1514 during a sliding process. In the implementation, the engaging portion 131 may include a fastener 1311 and a sliding block 1312. The sliding block 1312 is slidably disposed in the accommodating cavity 1514 and operable to slide through the extension hole 1516 in the width direction Y. One end of the sliding block 1312 is connected with the side button 133 via the transmission portion 132. Specifically, one end of the sliding block 1312 is connected with the pulling segment 1322 (as illustrated in FIG. 4), and the fastener 1311 is connected with the other end of the sliding block 1312 and is adjacent to the extension hole 1516. A shape of the fastener 1311 may be adapted to a shape of the extension hole 1516. In an example, at least part of the fastener 1311 has a size smaller than an inner diameter of the extension hole 1516, so that the fastener 1311 can extend out of the accommodating cavity 1514 through the extension hole 1516 to engage with the matching portion 121. A size of the sliding block 1312 may be larger than the inner diameter of the extension hole 1516. For example, a width of the sliding block 1312 in the width direction Y is larger than the inner diameter of the extension hole 1516. As such, when the fastener 1311 extends out through the extension hole 1516, the sliding block 1312 may abut against the second plate body 1512 to prevent the entire engaging portion 131 from extending out through the extension hole 1516, thereby limiting the sliding stroke of the engaging portion 131.

The side button 133 is connected with the engaging portion 131 via the transmission portion 132. When the first housing 110 and the second housing 120 are folded relative to each other, the second surface 113 contacts the fourth surface 123, and the engaging portion 131 is engaged with the matching portion 121 under the driving of the side button 133.

When the first housing 110 and the second housing 120 are unfolded relative to each other, the fastener 1311 of the engaging portion 131 extends out of the accommodating cavity 1514 through the extension hole 1516, and at this point, the engaging portion 131 is at a first position, and the first housing 110 is disengaged from the second housing 120. During relative folding of the second housing 120 and the first housing 110, when the second housing 120 rotates a certain angle, the second housing 120 abuts against the engaging portion 131 and applies a lateral force of a certain magnitude on the engaging portion 131. The lateral force may be in the width direction Y, or the lateral force may have a component force in the width direction Y. The engaging portion 131 is driven by the lateral force to gradually retract into the accommodating cavity 1514 until the engaging portion 131 is fully retracted into accommodating cavity 1514. The second housing 120 may further rotate until the second housing 120 is fully folded relative to the first housing 110, and at this point, the clamping hole 1211 (as illustrated in FIG. 3 and FIG. 4) of the second housing 120 faces the extension hole 1516, and under the action of a reset member 160 (which will be described in detail hereinafter), the fastener 1311 of the engaging portion 131 extends through the extension hole 1516 and is engaged with the clamping hole 1211, so that the first housing 110 and the second housing 120 are locked together, and at this point, and the first housing 110 and the second housing 120 are in a locked state. When the engaging portion 131 is driven by a pulling force of the pulling rope 1321 (as illustrated in FIG. 3 and FIG. 4) to gradually retract into the accommodating cavity 1514 through the extension hole 1516 to lift the locked state of the first housing 110 and the second housing 120, so that the first housing 110 and the second housing 120 can be unfolded relative to each other.

The pulling rope 1321 with a simple structure is adopted to connect the side button 133 and the engaging portion 131, a transmission connection between the side button 133 and the engaging portion 131 can be realized without a complex transmission structure. In addition, the pulling rope 1321 is small in size and thus does not occupy an excessively large space in the accommodating cavity 1514, and the pulling rope 1321 may be disposed in a gap between two adjacent electronic components in the accommodating cavity 1514. For example, the pulling rope 1321 may extend through the gap to connect the side button 133 and the engaging portion 131 without occupying an excessively large space in the accommodating mechanism 150, so that a sufficient space can be provided for accommodating electronic components.

In some implementations, as illustrated in FIG. 3, the first housing 110 may further include a guide portion 114 for guiding the engaging portion 131. As an example, the guide portion 114 may include a first guide plate 1141, a second guide plate 1142, and a limit plate 1143. The first guide plate 1141 and the second guide plate 1142 are disposed on the second surface 113, and arranged at both sides of the extension hole 1516, respectively. Both the first guide plate 1141 and the second guide plate 1142 may be substantially parallel to the width direction Y, where the first guide plate 1141 and the second guide plate 1142 are arranged at both sides of the extension hole 1516 respectively and both are received in the accommodating cavity 1514. The first guide plate 1141 and the second guide plate 1142 cooperatively define a sliding groove 1144, and the engaging portion 131 is received in the sliding groove 1144 in the width direction Y. The sliding groove 1144 communicates with the extension hole 1516. The limit plate 1143 is disposed between the first guide plate 1141 and the second guide plate 1142 and opposite to the extension hole 1516 in the width direction Y, and the limit plate 1143 is disposed on a side of the first guide plate 1141 away from the second plate body 1512. The engaging portion 131 is slidably received in the sliding groove 1144 in the width direction Y, and both the first guide plate 1141 and the second guide plate 1142 may abut against the sliding block 1312, but will not hinder a normal sliding of the sliding block 1312. A distance between the first guide plate 1141 and the second guide plate 1142 is greater than a length of the fastener 1311 in the length direction X, so that the engaging portion 131 does not sway during the sliding process, and slides more smoothly.

In some implementations, as illustrated in FIG. 3 and FIG. 5, the locking mechanism 130 may also include a guide portion 134 received in the accommodating cavity 1514. The guide portion 134 is received in the accommodating mechanism 150, and the pulling rope 1321 is wound around the guide portion 134, so that the other end of the pulling segment 1322 connected with the engaging portion 131 is perpendicular to the other end of the connecting segment 1323 connected with the side button 133. When the side button 133 slides in the length direction X, a force in the length direction X applied to the connecting segment 1323 is converted into a pulling force in the width direction Y for the pulling segment 1322 to pull the engaging portion 131 to retract into the accommodating cavity 1514, so that the engaging portion 131 is disengaged from the matching portion 132. As an example, the guide portion 134 may have a cylinder structure, which may be received in the accommodating cavity 1514 (as illustrated in FIG. 3) and fixed on the second surface 113 (as illustrated in FIG. 2), and the pulling rope 1321 may be wound around the guide portion 134 such that the pulling segment 1322 and the connecting segment 1323 respectively extend in two intersecting directions. For example, the pulling segment 1322 may extend substantially in the width direction Y, and the connecting segment 1323 may extend substantially in the length direction X. As such, when the side button 133 is driven by an external force FX in the length direction X (as illustrated in FIG. 4) to move, the engaging portion 131 can be subjected to a traction force that is substantially the same as the external force FX since the pulling rope 1321 has a substantially same acting force on its entirety. The pulling segment 1322 extends in the width direction Y to ensure that the engaging portion 131 can receive a pulling force in the width direction Y, so that the engaging portion 131 may be driven by the pulling force to move from the first position to the second position in the width direction Y to disengage from the matching portion 132. As another example, as illustrated in FIG. 5, the guide portion 134 may be a fixed pulley, and the fixed pulley is rotatably received in the accommodating mechanism 150. The fixed pulley defines a guide groove 1341 on an outer circumference of the fixed pulley, and the pulling rope 1321 may be wound in the guide groove 1341. With the fixed pulley, a direction of a force can be changed, so that a force applied by the side button 133 in the length direction X can be converted into the traction force in the width direction Y, and meanwhile, the fixed pulley can guide the pulling rope 1321 during rotation without introducing an additional traction force.

Refer to FIG. 2, FIG. 4, and FIG. 5, in the implementation, the housing assembly 100 may further include the reset member 160 for resetting the engaging portion 131 after the engaging portion 131 is retracted into the accommodating mechanism 150. The reset member 160 can reset the engaging portion 131 from the second position to the first position. The reset member 160 is connected with the engaging portion 131 and the first housing 110. The reset member 160 may be made of elastic material such as spring or rubber. Specifically, for example, the reset member 160 may be a spring, the spring has one end connected with the engaging portion 131 in the width direction Y and the other end abutting against the limit plate 1143 of the guide portion 114 in the width direction Y. When the engaging portion 131 is driven by the force exerted by the side button 133 to retract into the accommodating mechanism 150 through the extension hole 1516, the spring is compressed to generate the restoring force, and when the force exerted by the side button 133 is removed, the restoring force generated by the spring drives the engaging portion 131 to extend out of the accommodating mechanism 150 through the extension hole 1516.

As illustrated in FIG. 3, when the reset member 160 is in a free state, the engaging portion 131 is at the first position, and at this point, the fastener 1311 may be engaged with the matching portion 121 of the second housing 120, so that the first housing 110 and the second housing 120 are in the locked state. As illustrated in FIG. 4, when the engaging portion 131 is subjected to an external force (for example, when the side button 133 is subjected to the force FX in the length direction X), the side button 133 slides substantially in the length direction X and pulls the engaging portion 131 to move from the first position to the second position, and at this point, the fastener 1311 can be completely disengaged from the matching portion 121 of the second housing 120, so that the first housing 110 is disengaged from the second housing 120, and the reset member 160 is compressed and deformed. When the external force FX exerted on the side button 133 is removed, the engaging portion 131 is driven by the restoring force of the reset member 160 to slide from the second position to the first position, and thus the engaging portion 131 can be engaged with the matching portion 121 to lock the first housing 110 and the second housing 120 together. With the reset member 160, the engaging portion 131 can be maintained at the first position, so that the first housing 110 and the second housing 120 can be maintained in the locked state.

In some implementations, as illustrated in FIG. 4 and FIG. 5, the reset member 160 may be implemented as two reset members 160, and the two reset members 160 may be arranged side by side and connected between the engaging portion 131 and the limit plate 1143. The engaging portion 131 also includes a fixing post 1313 received in the accommodating cavity 1514 and used to stabilize the reset member 160, and the fixing post 1313 is connected with a side of the sliding block 1312 away from the fastener 1311 in the width direction Y and is received in the sliding groove 1144. The spring is sleeved on the fixing post 1313. In an example, in the width direction Y, a difference between a total length of the spring and a length of the fixing post 1313 is greater than or equal to the length of the fastener 1311. The fixing post 1313 may be implemented as two fixing posts 1313, and each of the two fixing posts 1313 is sleeved with one reset member 160. With the two reset members 160, a relatively large restoring force can be applied to the engaging portion 131, so that the engaging portion 131 can quickly reset. The two reset members 160 may be supported on both ends of the engaging portion 131, where the both ends of the engaging portion 131 are symmetrical about a symmetry axis of the engaging portion 131 in the width direction Y. For example, the two reset members 160 may be disposed at positions of one-quarter and three-quarters of a total length of the engaging portion 131 in the width direction Y, so that the both ends of the engaging portion 131 are force-balanced for a relatively stable sliding process.

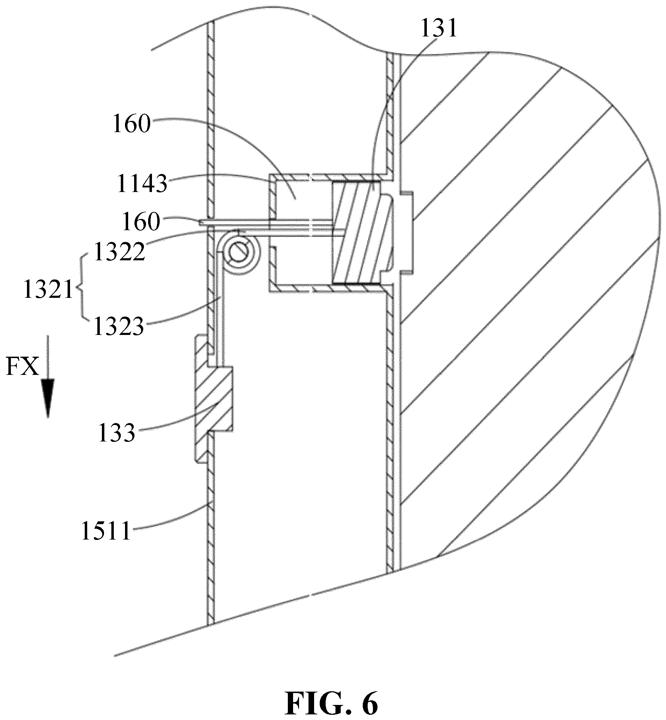

In some implementations, as illustrated in FIG. 6, the reset member 160 may also be a reset rod. The first plate body 1511 may define a reset hole. The reset hole may extend through the first plate body 1511 in a sliding direction of the engaging portion 131 and be spaced apart from the guide hole 1517. The reset rod may be movably extend through the reset hole, where the reset rod has one end connected with the sliding block 1312 of the engaging portion 131 in the width direction Y and the other end that may selectively extend out of or retracted into the accommodating cavity 1514 through the reset hole. For example, the other end of the reset rod extends through the reset hole and is exposed to the outside of the accommodating cavity 1514 when the engaging portion 131 retracts into the accommodating cavity 1514. When the reset rod is subjected to an external force in the width direction Y, the other end of the reset rod retracts into the accommodating cavity 1514 through the reset hole to drive the engaging portion 131 to extend out of the accommodating cavity 1514, so that the engaging portion 131 is engaged with the matching portion 121. For example, when the engaging portion 131 is at the first position, the reset rod may be received in the accommodating cavity 1514. When the side button 133 pulls the engaging portion 131 via the transmission portion 132 to move from the first position to the second position, the reset rod may move with the engaging portion 131 to partially extend out of the accommodating cavity 1514 through the reset hole, and a length of part of the reset rod extends beyond the first plate body 1511 may be substantially equal to a moving distance of the engaging portion 131 from the first position to the second position. When the first housing 110 and the second housing 120 are in the folded state, the reset rod can be pressed by the user to retract into the accommodating cavity 1514 through the reset hole, and the reset rod then pushes the engaging portion 131 to move from the second position to the first position during retracting into the accommodating cavity 1514 through the reset hole, thereby resetting the engaging portion 131 and making the fastener 1311 of the engaging portion 131 engaged with the clamping hole 1211. With aid of the reset rod, the engaging portion 131 may be reset without using an elastic element such as a spring, so as to avoid a failure of resetting the engaging portion 131 due to a failure of the elastic element. In addition, the user can clearly determine whether the first housing 110 and the second housing 120 are locked together by the engaging portion 131 by observing whether the reset rod extends out of the accommodating cavity 1514 through the reset hole.

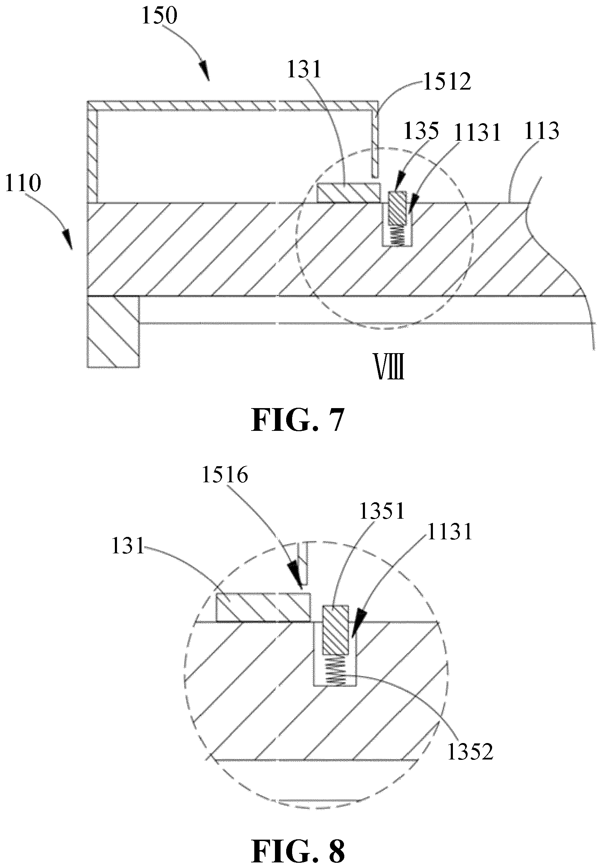

In some implementations, as illustrated in FIG. 7 and FIG. 8, the locking mechanism 130 may further include a stop assembly 135 for limiting a movement path of the engaging portion 131. As an example, the second surface 113 may define a stop hole 1131, and the stop hole 1131 may be defined on a position of the second surface 113 close to the extension hole 1516 and extend in the thickness direction Z. For example, when the first housing 110 and the second housing 120 are folded relative to each other, in the thickness direction Z, a projection of the stop hole 1131 on the second surface 113 at least partially coincides a projection of the clamping hole 1211 on the second surface 113, and the projection of the stop hole 1131 on the second surface 113 is larger than the projection of the clamping hole 1211 on the second surface 113, so that the stop assembly 135 (which will be described in detail hereinafter) may prevent the engaging portion 131 from extending out of the accommodating cavity 1514 through the extension hole 1516 when the first housing 110 and the second housing 120 are unfolded relative to each other. The stop assembly 135 may include a stop post 1351 and an elastic member 1352. The elastic member 1352 may be received in the stop hole 1131 and connected with the first housing 110. Specifically, the elastic member 1352 has one end connected with a bottom of the stop hole 1131 and the other end connected with the stop post 1351. The stop post 1351 extends and retracts near the extension hole 1516 to selectively block the engaging portion 131. The stop post 1351 is located within a rotation region of the second housing 120, so that the second housing 120 can press the stop post 1351 to abut against the stop hole 1131 during a rotation process. The stop post 1351 is disposed in the stop hole 1131 and connected with the elastic member 1352, where the stop post 1351 can extend out of or retract into the stop hole 1131, and the elastic member 1352 can provide a certain supporting force for the stop post 1351 to make the stop post 1351 in a state of extending beyond the second surface 113. When being free of an external force, the stop post 1351 can partially extend out of the stop hole 1131, that is, partially extend beyond the second surface 113, and at this point, the engaging portion 131 may be blocked by the stop post 1351 to be in the extension hole 1516. When the second housing 120 and the first housing 110 are folded relative to each other, the second housing 120 can press the stop post 1351 into the stop hole 1131, so that the stop post 1351 does not block the engaging portion 131, and at this point, the stop post 1351 exerts a pressure on the elastic member 1352 in the thickness direction Z, so that the elastic member 1352 is deformed to a compressed state. When the extension hole 1516 faces the clamping hole 1211, since the engaging portion 131 is not blocked by the stop post 1351, the engaging portion 131 is driven by the restoring force of the reset member 160 to extend out of the accommodating cavity 1514 through the extension hole 1516 to engage with the clamping hole 1211, thereby locking the second housing 120 and the first housing 110. The side button 133 can be slid by the user to drive the engaging portion 131 to leave the clamping hole 1211, thereby lifting the locked state of the second housing 120 and the first housing 110. When the first housing 110 and the second housing 120 are unfolded relative to each other, the fourth surface 123 of the second housing 120 is disengaged from the second surface 113, and since no external force is applied, the elastic member 1352 restores from the compressed state to the free state with aid of the restoring force, so that the stop post 1351 extends out of the stop hole 1131 to prevent the engaging portion 131 from extending out of the accommodating cavity 1514, that is, the stop post 1351 is driven by the restoring force to extend out beyond the stop hole 1131 again, so as to prevent the engaging portion 131 from extending out of the accommodating cavity 1514 through the extension hole 1516 before the engaging portion 131 extends out of the accommodating cavity 1514 through the extension hole 1516. The stop assembly 135 is configured in such a way that the following advantages may be provided. It is possible to avoid an exposure of a relatively large part of the engaging portion 131 in the unlocked state, and meanwhile, it can also avoid a problem generated when the second housing 120 and the first housing 110 are folded relative to each other, for example, a failure of a normal retraction of the engaging portion 131 into the accommodating cavity 1514 through the extension hole 1516 due to an interference between the second housing 120 and the fastener 1311 extending out of the accommodating cavity 1514 through the extension hole 1516 can be avoided, where the failure of the normal retraction of the engaging portion 131 into the accommodating cavity 1514 through the extension hole 1516 may result in that the engaging portion 131 is stuck between and abuts against the first housing 110 and the second housing 120, and the first housing 110 cannot be in close contact with the second housing 120.

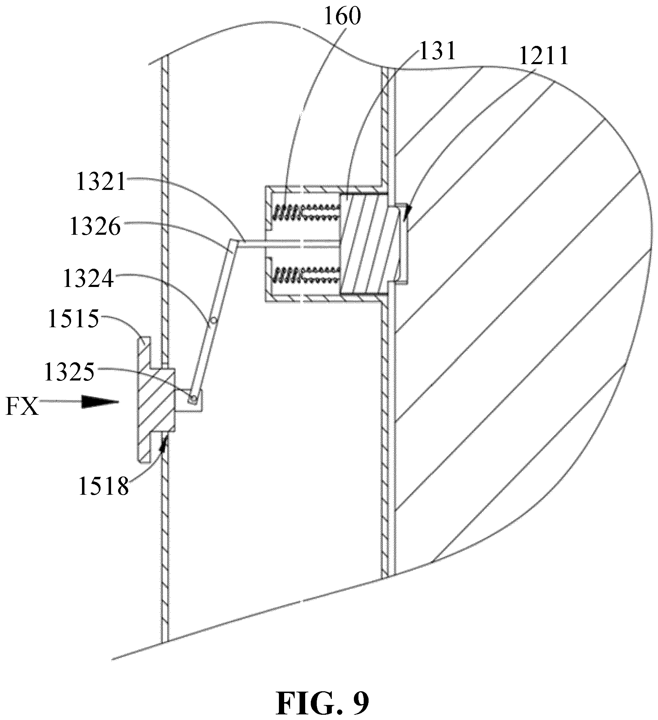

In some implementations, as illustrated in FIG. 9, the side button 133 may be a press button. The first plate body 1511 may not define the above-mentioned guide hole 1517, but define a button hole 1518. An aperture size of the button hole 1518 may be adapted to a structure of the guide block 1331 of the side button 133. The side button 133 may be slidably disposed in an axial direction of the button hole 1518 (which is substantially parallel to the width direction Y). The transmission portion 132 may also include a connecting rod 1324 and the pulling rope 1321. The connecting rod 1324 is rotatably connected with the first housing 110 via a pivot that is between two ends of the connecting rod 1324, and may be located between a sliding path of the side button 133 and a sliding path of the engaging portion 131. The connecting rod 1324 has a first end connected with the side button 133 and a second end connected with the engaging portion 131 via the pulling rope 1321. The pulling rope 1321 has the other end connected with the sliding block 1312 in the width direction Y. The side button 133 is driven by a pressing force to drive the connecting rod 1324 to rotate, such that the first end of the connecting rod 1324 moves away from the button hole 1518 in the width direction Y, and correspondingly the second end of the connecting rod 1324 moves away from the extension hole 1516 in the width direction Y, and thus, when rotating, the connecting rod 1324 may pull the engaging portion 131 to move away from the clamping hole 1211 via the pulling rope 1321, so that the engaging portion 131 is disengaged from the matching portion 121. The connecting rod 1324 has a hinge point 1325 and a connecting point 1326. In an example, the hinge point 1325 and the connecting point 1326 are at the two ends of the connecting rod 1324, respectively. The first end of the connecting rod 1324 is hinged with the side button 133 via the hinge point 1325, and the second end of the connecting rod 1324 is connected with one end of the pulling rope 1321 via the connecting point 1326. The pulling rope 1321 can extend in the axial direction of the extension hole 1516 (which is substantially parallel to the width direction Y), and the other end of the pulling rope 1321 is connected with the sliding block 1312 of the engaging portion 131. The side button 133 is driven by the pressing force to move toward the accommodating cavity 1514, and drives the connecting rod 1324 to rotate counterclockwise on a plane formed by the length direction X and the width direction Y. During rotation of the connecting rod 1324, the hinge point 1325 rotates away from the button hole 1518, correspondingly the connecting point 1326 moves away from the extension hole 1516, and the pulling rope 1321 is driven by the connecting rod 1324 to pull the engaging portion 131 to move from the first position to the second position, so that the engaging portion 131 is disengaged from the matching portion 121. As an example, a distance L1 between the hinge point 1325 and the pivot of the connecting rod 1324 is greater than a distance L2 between the connecting point 1326 and the pivot of the connecting rod 1324, as such, according to the lever principle, with a relatively small pressing force of the user, a relatively large pulling force can be provided for the pulling rope 1321 via the connecting rod 1324, so as to drive the engaging portion 131 to disengage from the clamping hole 1211.

A transmission cooperation between the side button 133 and the engaging portion 131 can be achieved via a simple structure of the connecting rod 1324 and the pulling rope 1321, a sliding arrangement of the side button 133 in the width direction Y does not involve an extension and retraction in the thickness direction Z, thereby not thickening the first housing 110, and the engaging portion 131 can be disengaged from the matching portion 121 in response to user's pressing, which is convenient for operation.

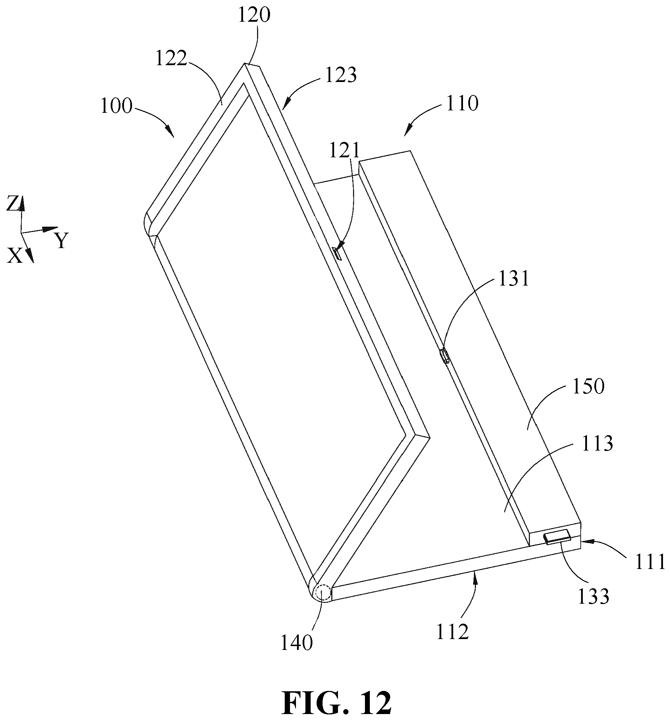

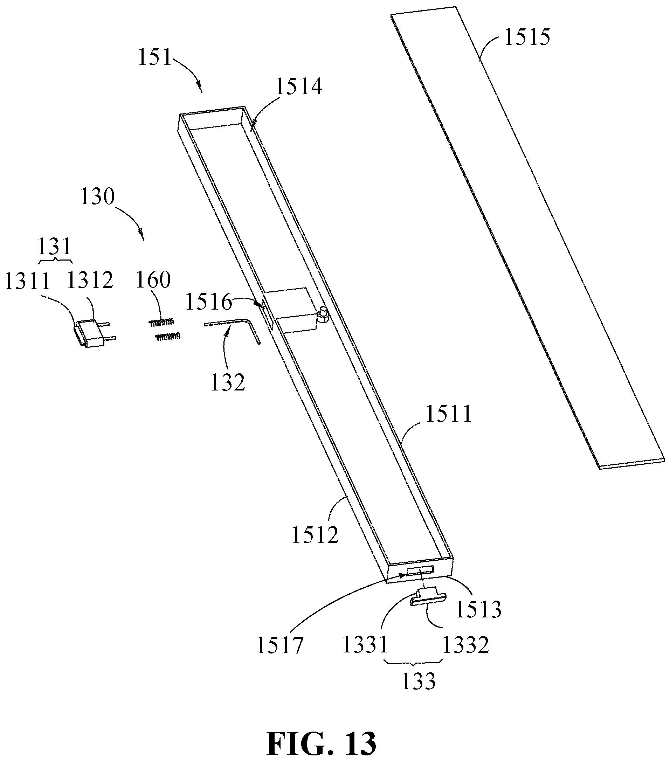

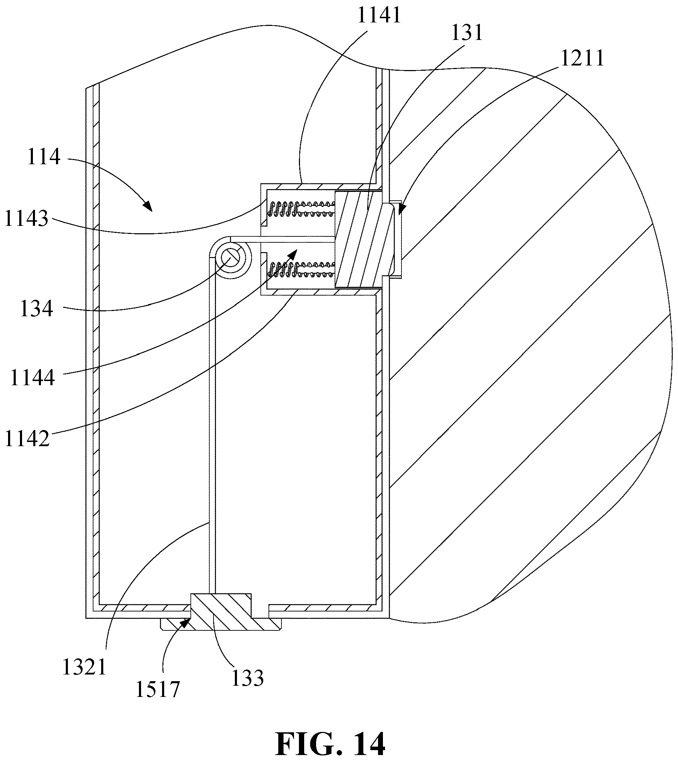

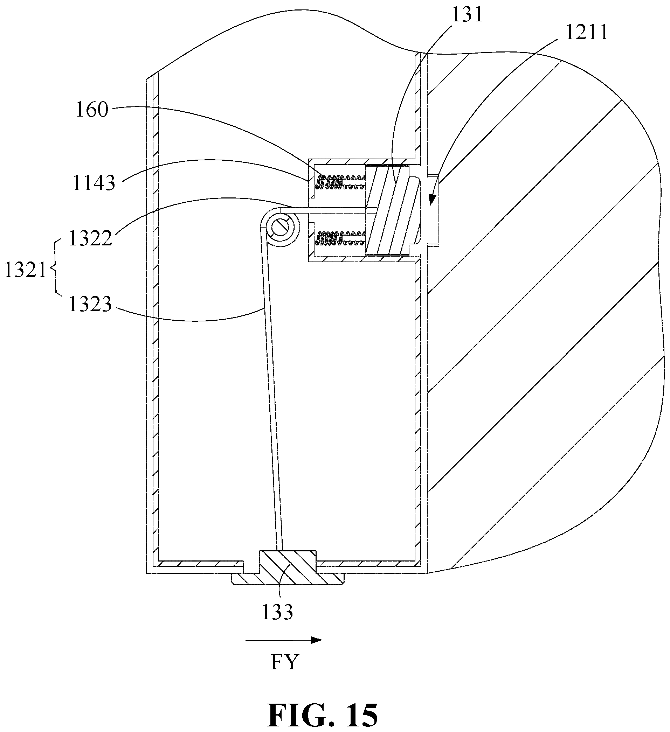

Refer to FIGs. 12-15, the housing assembly in the implementation is similar to the housing assembly in the aforementioned implementation in structure except that the side button 133 is disposed at one of the two side plates 1513, and correspondingly, the guide hole 1517 is defined in the side plate 1513 where the side button 133 is disposed, and the side button 133 is slidably disposed in the guide hole 1517 in the width direction Y. The side button 133 is connected with the engaging portion 131 via the transmission portion 132, and when the side button 133 is subjected to an external force FY in the width direction Y (as illustrated in FIG. 15), the side button 133 slides in the width direction Y to drive the engaging portion 131 to disengage from the matching portion 121 via the transmission portion 132, thereby lifting the locked state of the first housing 110 and the second housing 120. It is noted that, as illustrated in FIGs. 3, 4 and 6, in the aforementioned implementations, the connecting segment 1323 of the transmission portion 132 is connected with a side surface of the sliding block 1331 of the side button 133, and the side surface is substantially parallel to the width direction Y and close to the connecting segment 1323. However, as illustrated in FIG. 14 and FIG. 15, in the implementation, the connecting segment 1323 of the transmission portion 132 is connected with a bottom surface of the sliding block of the side button 133, and the bottom surface is substantially parallel to the width direction Y and away from the button cap 1332. In addition, parts not described in detail in the implementation are similar to those in the above-mentioned related implementations, which will not be repeated herein, and reference can be made to the above-mentioned related implementations.

In the housing assembly 100 provided in the implementations of the disclosure, the side button 133 is movably disposed at the side wall 111 of the first housing 110 (for example, the first plate body 1511 or one of the two side plates 1513), such that an breakdown in the integrity of the second surface 113 can be avoided due to absence of a hole defined on the second surface 113 of the first housing 110, and the thickness of the first housing 110 is not required to additionally increase to meet a stroke of the side button 133 (for example, a sliding stroke or a pressing stroke of the side button 133) generated when the side button 111 extends out of or retract into the first housing 110, which is beneficial to reducing the thickness of the whole machine and realizing a thin design.

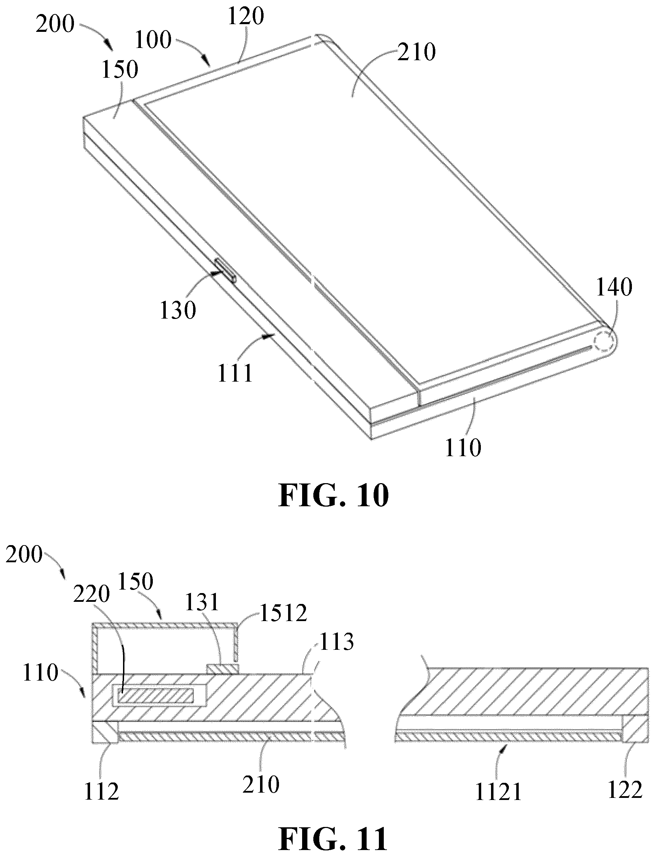

Refer to FIG. 10 and FIG. 11, a foldable electronic device 200 is further provided in the implementations of the disclosure. The foldable electronic device 200 may be, but is not limited to, an electronic device such as a mobile phone, a tablet computer, and a smart watch. In the implementation, for example, the foldable electronic device 200 is a mobile phone.

Refer to FIG. 10, the foldable electronic device 200 includes a housing assembly 100 and a display screen 210. The display screen 210 may be laid on a side surface of the first housing 110 and a side surface of the second housing 120 that face the same direction. The housing assembly 100 is used to carry the display screen 210, where the display screen 210 may be a flexible display screen, and the flexible display screen may be bent to a certain extent. The flexible display screen may be sequentially laid on a side surface of the first housing 110 and a side surface of the second housing 120 that face the same direction. For example, the flexible display screen may be sequentially laid on the first surface 112, the shaft mechanism 140, and the third surface 122 of the housing assembly 100 as illustrated in FIG. 1. As illustrated in FIG. 10, when the first housing 110 and the second housing 120 are folded relative to each other, the flexible display screen may be folded into two display regions, and the two display regions are both exposed to the outside of the housing assembly 100, and the user can directly view or operate the flexible display screen from the outside. In addition, the flexible display screen may be sequentially laid on the second surface 113, the shaft mechanism 140, and the fourth surface 123 of the housing assembly 100 as illustrated in FIG. 1, and when the first housing 110 and the second housing 120 are folded relative to each other, the flexible display screen may be folded into two display regions, and the two display regions are both between the first housing 110 and the second housing 120 and not exposed to the outside. The first surface 112 and the third surface 122 can act as appearance surfaces of the foldable electronic device 200, which can protect the display screen 210. In addition, the display screen 210 may also include two display portions, where one of the two display portions may be disposed at the first housing 110 and the other one of the two display portions may be disposed at the second housing 120, and the two display portions may be independent of each other or connected with each other via a flexible display portion.

In some implementations, as illustrated in FIG. 11, the first surface 112 may be recessed to defining a mounting groove 1121, and the third surface 122 may be recessed to define a mounting groove 1121, and the mounting grooves 1121 on the first surface 112 and the third surface 122 may communicate with each other for mounting the display screen 210. In an example, a depth of the mounting groove 1121 may be substantially the same as a thickness of the display screen 210, the display screen 210 may be laid in the mounting groove 1121 to reduce the thickness of the whole machine, and a display surface of the display screen 210 may be substantially flush with the first surface 112 and the third surface 122.

In some implementations, as illustrated in FIG. 1 and FIG. 11, the foldable electronic device 200 includes a main board 220, and the main board 220 may be disposed in the first housing 110. The first housing 110 may define an accommodating space for accommodating electronic components such as the main board 220. In an example, the accommodating space can communicate with the accommodating cavity 1514 of the accommodating mechanism 150, which facilitates circuit connections between the electronic components. Further, the display screen 210 is electrically connected with the main board 220. During a movement of the side button 133, a control signal is sent to the main board 220, and the main board 220 controls screen-on and screen-off of the display screen 210. The side button 133 may be integrated with an electronic component that may communicate with and perform data interaction with the main board 220, for example, the electronic component can send a control signal to the main board 220, so that the display screen 210 can be lit up or turned off when the first housing 110 and the second housing 120 are locked together or disengaged from each other in response to the user's operation. For example, when the side button 133 slides from an initial position in the length direction X, the side button 133 drives the engaging portion 131 to move to the second position, so that the locked state of the first housing 110 and the second housing 120 can be lifted, and at this point, the main board 220 is triggered to send a control command to light up the display screen 210. When the first housing 110 and the second housing 120 are locked together, the side button 133 returns to the initial position, the main board 220 is triggered to send a control command to turn off the display screen 210. With aid of the movement of the side button 133, the housing assembly 100 can be locked or unlocked, and a function of controlling the display screen 210 can also be realized at the same time, thereby realizing a dual function of the side button 133, avoiding an additional power button, and reducing a difficulty of product processing and assembly.

In the foldable electronic device 200 provided in the implementations of the disclosure, the above-mentioned side button 133 of the housing assembly 100 is movably disposed at the side wall 111 of the first housing 110 (for example, the first plate body 1511 or one of the two side plates 1513), and thus there is no need to define holes on the second surface 113 of the first housing 110 to break the integrity of the second surface 113, and there is no need to thicken the first housing 110 to meet the stroke of the side button 133 generated when the side button 111 extends out of or retract into the first housing 110, so that the thickness of the whole machine is reduced and a thin design is realized.

## Claims

1. A foldable electronic device (200), comprising a display screen (210) and a housing assembly (100), wherein the display screen (210) is sequentially laid on a first surface (112), a shaft mechanism (140) and a third surface (122) of the housing assembly (100) or is sequentially laid on a second surface (113), the shaft mechanism (140) and a fourth surface (123) of the housing assembly (100), wherein the housing assembly (100) comprises:
the first housing (110) comprising a side wall (111), the first surface (112), and the second surface (113) opposite the first surface (112), the side wall (111) being connected between the first surface (112) and the second surface (113);
a locking mechanism (130) disposed at the first housing (110) and comprising an engaging portion (131), a transmission portion (132), and a side button (133), the side button (133) being drivingly connected with the engaging portion (131) via the transmission portion (132); and
the second housing (120), wherein the second housing (120) is rotatably connected with the first housing (110), so that the second housing (120) and the first housing (110) are selectively folded or unfolded relative to each other, and the second housing (120) is provided with a matching portion (121) matching the engaging portion (131);
wherein when the first housing (110) and the second housing (120) are folded relative to each other, the second surface (113) is in contact with the second housing (120);
wherein the engaging portion (131) is selectively engaged with or disengaged from the matching portion (121) under the driving of the side button (133); and
wherein the first housing (110) further comprises an accommodating mechanism (150), the accommodating mechanism (150) is disposed on an end of the second surface (113) away from a junction between the first housing (110) and the second housing (120), and protrudes toward a direction away from the first surface (112), the engaging portion (131) is disposed at the accommodating mechanism (150) and selectively extends out of or retracts into the accommodating mechanism (150), and the transmission portion (132) is received in the accommodating mechanism (150);
wherein the accommodating mechanism (150) comprises:
a first plate body (1511) extending in a length direction of the first housing (110);
a second plate body (1512) disposed opposite the first plate body (1511) in the length direction of the first housing (110);
two side plates (1513) disposed opposite each other in the width direction of the first housing (110) and connected between the first plate body (1511) and the second plate body (1512);
a cover plate (1515) covering the first plate body (1511), the second plate body (1512), and the two side plates (1513),
an accommodating cavity (1514) cooperatively defined by the first plate body (1511), the second plate body (1512), the two side plates (1513), the cover plate (1515), and the second surface (113), the transmission portion (132) being disposed in the accommodating cavity (1514), wherein the transmission portion (132) is disposed in the accommodating cavity (1514);
wherein the side button (133) is slidably disposed at the first plate body (1511) in the length direction of the first housing (110), the transmission portion (132) has one end connected with the side button (133) and the other end connected with the engaging portion (131), and the side button (133) is configured to drive the engaging portion (131) to disengage from the matching portion (121) through sliding in the length direction of the first housing (110)
wherein the locking mechanism (130) further comprises a guide portion (1134) disposed in the accommodating cavity (1514), the transmission portion (132) comprises a pulling rope (1321) having a pulling segment (1322) and a connecting segment (1323), the pulling segment (1322) has one end connected with one end of the connecting segment (1323) and the other end connected with the side button (133), the connecting segment (1323) has the other end connected with the engaging portion (131), the pulling rope (1321) is wound around the guide portion (134) so that the other end of the pulling segment (1322) connected with the side button (133) is perpendicular to the other end of the connecting segment (1323) connected with the engaging portion (131), and when the side button (133) slides in the length direction of the first housing (110), an acting force in the length direction of the first housing (110) on the connecting segment (1323) is converted into a traction force in the width direction of the first housing (110) on the pulling segment (1322) to pull the engaging portion (131) to retract into the accommodating cavity (1514), so that the engaging portion (131) is disengaged from the matching portion (121).

2. The foldable electronic device (200) of claim 1, wherein the accommodating mechanism (150) is flush with the second housing (120) when the second housing (120) and the first housing (110) are folded relative to each other.

3. The foldable electronic device (200) of claim 2, wherein the engaging portion (131) is slidably disposed at the second plate body (1512) in a width direction of the first housing (110), and the second housing (120) is adjacent to the second plate body (1512) when the first housing (110) and the second housing (120) are folded relative to each other;
wherein the cover plate (1515) is flush with an outer surface of the second housing (120) when the first housing (110) and the second housing (120) are folded relative to each other.

4. The foldable electronic device (200) of claim 3, wherein the second plate body (1512) defines an extension hole (1516) communicating with the accommodating cavity (1514), the engaging portion (131) comprises a fastener (1311) and a sliding block (1312), the sliding block (1312) has one end connected with the fastener (1311) and the other end connected with the side button (133) via the transmission portion (132), the sliding block (1312) is operable to slide through the extension hole (1516) in the width direction of the first housing (110), and when the first housing (110) and the second housing (120) are folded relative to each other, the extension hole (1516) faces the matching portion (121) and the fastener (1311) is operable to extend out of the accommodating cavity (1514) to engage with the matching portion (121).

5. The foldable electronic device (200) of claim 3 or 4, wherein the first plate body (1511) has a first plate wall (15110), and each of the two side plates (1513) has a plate wall (15130), the side wall (111) of the accommodating mechanism (150) comprises the first plate wall (15110) and the plate walls (15130), and the side button (133) is movably disposed at the first plate wall (15 110) of the accommodating mechanism (150).

6. The foldable electronic device (200) of any one of claims 3-5, wherein the side button (133) is slidably disposed at one of the two side plates (1513) in the width direction of the first housing (110), the transmission portion (132) has one end connected with the side button (133) and the other end connected with the engaging portion (131), and the side button (133) is configured to drive the engaging portion (131) to disengage from the matching portion (121) through sliding in the width direction of the first housing (110).

7. The foldable electronic device (200) of claim 1, wherein the first plate body (1511) defines a guide hole (1517) communicating with the accommodating cavity (1514), the side button (133) comprises a guide block (1331) and a button cap (1332), the guide block (1331) is slidably disposed in the guide hole (1517) in the length direction of the first housing (110) and connected with the connecting segment (1323), the button cap (1332) is connected with the guide block (1331) and is located outside the guide hole (1517), and wherein in the length direction of the first housing (110), a length of the guide hole (1517) is greater than a length of the guide block (1331) and less than a length of the button cap (1332).

8. The foldable electronic device (200) of any one of claims 4-7, wherein the first housing (110) defines a stop hole (1131) extending in a thickness direction of the first housing (110) on a position of the second surface (113) close to the extension hole (1516), the locking mechanism (130) further comprises a stop assembly (135) for limiting a movement path of the engaging portion (131), the stop assembly (135) comprises a stop post (1351) and an elastic member (1352), the elastic member (1352) has one end connected with a bottom of the stop hole (1131) and the other end connected with the stop post (1351), wherein the stop post (1351) is pressed into the stop hole (1131) by the second housing (120) to deform the elastic member (1352) when the first housing (110) and the second housing (120) are folded relative to each other, and the stop post (1351) is driven by a restoring force of the elastic member (1352) to extend out of the stop hole (1131) to prevent the engaging portion (131) from extending out of the accommodating cavity (1514) when the first housing (110) and the second housing (120) are unfolded relative to each other.

9. The foldable electronic device (200) of any one of claims 4-8, wherein the housing assembly (100) further comprises a reset member (160) configured to reset the engaging portion (131) retracted into the accommodating mechanism (150), and the reset member (160) is connected with the engaging portion (131) and the first housing (110).

10. The foldable electronic device (200) of claim 9, wherein the first housing (110) further comprises a guide portion (114), the guide portion (114) comprises a first guide plate (1141), a second guide plate (1142), and a limit plate (1143), the first guide plate (1141) and the second guide plate (1142) are disposed on the second surface (113) and spaced apart from each other, the first guide plate (1141) and the second guide plate (1142) are arranged at both sides of the extension hole (1516) respectively and cooperatively define a sliding groove (1144), the engaging portion (131) is slidably disposed in the sliding groove (1144) in the width direction of the first housing (110), the limit plate (1143) is disposed between the first guide plate (1141) and the second guide plate (1142) and is opposite to the extension hole (1516) in the width direction of the first housing (110), the reset member (160) is a spring, the spring has one end connected with the engaging portion (131) in the width direction of the first housing (110) and the other end abutted against the limit plate (1143) of the guide portion (114) in the width direction of the first housing (110), and the spring is compressed to generate a restoring force when the engaging portion (131) is driven to retract into the accommodating mechanism (150) through the extension hole (1516) by an acting force applied by the side button (133), and the restoring force is configured to drive the engaging portion (131) to extend out of the accommodating mechanism 150 through the extension hole (1516) when the acting force applied by the side button (133) is removed.

11. The foldable electronic device (200) of claim 9, wherein the first plate body (1511) defines a reset hole, the reset member (160) is a reset rod, the reset rod has one end connected with the engaging portion (131) in the width direction of the first housing (110) and the other end that extends through the reset hole and is exposed to the outside of the reset hole when the engaging portion (131) retracts into the accommodating mechanism (150), and when the reset rod is subjected to an external force toward the second plate body (1512) in the width direction of the first housing (110), the other end of the reset rod retracts into the reset hole to drive the engaging portion (131) to extend out from the accommodating cavity (1514), so that the engaging portion (131) is engaged with the matching portion (121).

12. The foldable electronic device (200) of any one of claims 3-5, wherein the side button (133) is movably disposed at the first plate body (1511) in the width direction of the first housing (110), the first plate body (1511) defines a button hole (1518), the side button (133) is movably disposed in the button hole (1518) in the width direction of the first housing (110), the transmission portion (132) comprises a pulling rope (1321) and a connecting rod (1324), the connecting rod (1324) is rotatably connected with the first housing (110) via a pivot that is between two ends of the connecting rod (1324), the connecting rod (1324) has one end connected with the side button (133) and the other end connected with the engaging portion (131) via the pulling rope (1321), and the side button (133) is configured to drive, in response to a pressing force on the side button (133), one end of the connecting rod (1324) connected with the side button (133) to move away from the button hole (1518) and the other end of the connecting rod (1324) connected with the engaging portion (131) to move away from the extension hole (1516), so that the pulling rope (1321) pulls the engaging portion (131) to disengage from the matching portion (121).

## Patentansprüche

1. Faltbare elektronische Vorrichtung (200), umfassend einen Anzeigebildschirm (210) und eine Gehäuseanordnung (100), wobei der Anzeigebildschirm (210) nacheinander auf eine erste Oberfläche (112), einen Wellenmechanismus (140) und eine dritten Oberfläche (122) der Gehäuseanordnung (100) gelegt ist oder nacheinander auf eine zweite Oberfläche (113), den Wellenmechanismus (140) und eine vierte Oberfläche (123) der Gehäuseanordnung (100) gelegt ist, wobei die Gehäuseanordnung (100) Folgendes umfasst:
das erste Gehäuse (110), das eine Seitenwand (111), die ersten Oberfläche (112) und die zweite Oberfläche (113) gegenüber der ersten Oberfläche (112) umfasst, wobei die Seitenwand (111) zwischen der ersten Oberfläche (112) und der zweiten Oberfläche (113) verbunden ist;
einen Verriegelungsmechanismus (130), der am ersten Gehäuse (110) angeordnet ist und einen Eingriffsabschnitt (131), einen Übertragungsabschnitt (132) und einen Seitenknopf (133) umfasst, wobei der Seitenknopf (133) über den Übertragungsabschnitt (132) mit dem Eingriffsabschnitt (131) antriebsmäßig verbunden ist; und
das zweite Gehäuse (120), wobei das zweite Gehäuse (120) drehbar mit dem ersten Gehäuse (110) verbunden ist, sodass das zweite Gehäuse (120) und das erste Gehäuse (110) wahlweise relativ zueinander zusammengeklappt oder auseinandergeklappt werden können, und das zweite Gehäuse (120) mit einem Passabschnitt (121) bereitgestellt ist, der zu dem Eingriffsabschnitt (131) passt;
wobei, wenn das erste Gehäuse (110) und das zweite Gehäuse (120) relativ zueinander zusammengeklappt sind, die zweite Oberfläche (113) mit dem zweiten Gehäuse (120) in Kontakt steht;
wobei der Eingriffsabschnitt (131) unter dem Antrieb des Seitenknopfes (133) wahlweise in den Passabschnitt (121) eingreift oder davon getrennt wird; und
wobei das erste Gehäuse (110) weiter einen Aufnahmemechanismus (150) umfasst, wobei der Aufnahmemechanismus (150) an einem Ende der zweiten Oberfläche (113) von einer Verbindung zwischen dem ersten Gehäuse (110) und dem zweiten Gehäuse (120) weg angeordnet ist und in einer Richtung von der ersten Oberfläche (112) weg vorsteht, wobei der Eingriffsabschnitt (131) am Aufnahmemechanismus (150) angeordnet ist und sich wahlweise aus dem Aufnahmemechanismus (150) heraus erstreckt oder darin zurückgezogen ist, und der Übertragungsabschnitt (132) im Aufnahmemechanismus (150) aufgenommen ist;
wobei der Aufnahmemechanismus (150) Folgendes umfasst:
einen ersten Plattenkörper (1511), der sich in einer Längsrichtung des ersten Gehäuses (110) erstreckt;
einen zweiten Plattenkörper (1512), der dem ersten Plattenkörper (1511) in der Längsrichtung des ersten Gehäuses (110) gegenüber angeordnet ist;
zwei Seitenplatten (1513), die in der Breitenrichtung des ersten Gehäuses (110) einander gegenüberliegend angeordnet sind und zwischen dem ersten Plattenkörper (1511) und dem zweiten Plattenkörper (1512) verbunden sind;
eine Abdeckplatte (1515), die den ersten Plattenkörper (1511), den zweiten Plattenkörper (1512) und die beiden Seitenplatten (1513) abdeckt,
einen Aufnahmehohlraum (1514), der gemeinsam durch den ersten Plattenkörper (1511), den zweiten Plattenkörper (1512), die beiden Seitenplatten (1513), die Deckplatte (1515) und die zweite Oberfläche (113) definiert ist, der Übertragungsabschnitt (132) im Aufnahmehohlraum (1514) angeordnet ist, wobei der Übertragungsabschnitt (132) im Aufnahmehohlraum (1514) angeordnet ist;
wobei der Seitenknopf (133) verschiebbar am ersten Plattenkörper (1511) in der Längsrichtung des ersten Gehäuses (110) angeordnet ist, der Übertragungsabschnitt (132) ein Ende aufweist, das mit dem Seitenknopf (133) verbunden ist, und das andere Ende, das mit dem Eingriffsabschnitt (131) verbunden ist, und der Seitenknopf (133) so ausgebildet ist, dass er den Eingriffsabschnitt (131) durch Verschieben in der Längsrichtung des ersten Gehäuses (110) vom Passabschnitt (121) trennt,
wobei der Verriegelungsmechanismus (130) weiter einen im Aufnahmehohlraum (1514) angeordneten Führungsabschnitt (1134) umfasst, wobei der Übertragungsabschnitt (132) ein Zugseil (1321) umfasst, das ein Zugsegment (1322) und ein Verbindungssegment (1323) aufweist, wobei das Zugsegment (1322) ein Ende aufweist, das mit einem Ende des Verbindungssegments (1323) verbunden ist, und das andere Ende, das mit dem Seitenknopf (133) verbunden ist, wobei das Verbindungssegment (1323) das andere Ende aufweist, das mit dem Eingriffsabschnitt (131) verbunden ist, wobei das Zugseil (1321) um den Führungsabschnitt (134) gewickelt ist, sodass das andere Ende des Zugsegments (1322), das mit dem Seitenknopf (133) verbunden ist, senkrecht zum anderen Ende des Verbindungssegments (1323), das mit dem Eingriffsabschnitt (131) verbunden ist, steht, und wenn der Seitenknopf (133) der in der Längsrichtung des ersten Gehäuses (110) gleitet, eine Kraft, die in der Längsrichtung des ersten Gehäuses (110) auf das Verbindungssegment (1323) wirkt, in eine Zugkraft auf das Zugsegment (1322) in der Breitenrichtung des ersten Gehäuses (110) umgewandelt wird, um den Eingriffsabschnitt (131) in den Aufnahmehohlraum (1514) zu ziehen, sodass der Eingriffsabschnitt (131) vom Passabschnitt (121) gelöst wird.

2. Faltbare elektronische Vorrichtung (200) nach Anspruch 1, wobei der Aufnahmemechanismus (150) bündig mit dem zweiten Gehäuse (120) ist, wenn das zweite Gehäuse (120) und das erste Gehäuse (110) relativ zueinander zusammengefaltet sind.

3. Faltbare elektronische Vorrichtung (200) nach Anspruch 2, wobei der Eingriffsabschnitt (131) an dem zweiten Plattenkörper (1512) in einer Breitenrichtung des ersten Gehäuses (110) verschiebbar angeordnet ist und das zweite Gehäuse (120) an den zweiten Plattenkörper (1512) angrenzt, wenn das erste Gehäuse (110) und das zweite Gehäuse (120) relativ zueinander zusammengefaltet sind;
wobei die Abdeckplatte (1515) bündig mit einer Außenfläche des zweiten Gehäuses (120) ist, wenn das erste Gehäuse (110) und das zweite Gehäuse (120) relativ zueinander zusammengefaltet sind.

4. Faltbare elektronische Vorrichtung (200) nach Anspruch 3, wobei der zweite Plattenkörper (1512) eine mit dem Aufnahmehohlraum (1514) in Verbindung stehende Verlängerungsöffnung (1516) definiert, wobei der Eingriffsabschnitt (131) ein Befestigungselement (1311) und einen Gleitblock (1312) umfasst, wobei der Gleitblock (1312) ein Ende aufweist, das mit dem Befestigungselement (1311) verbunden ist, und das andere Ende aufweist, das über den Übertragungsbereich (132) mit dem Seitenknopf (133) verbunden ist, wobei der Gleitblock (1312) in der Breitenrichtung des ersten Gehäuses (110) betriebsfähig ist, um durch die Verlängerungsöffnung (1516) zu gleiten, und wenn das erste Gehäuse (110) und das zweite Gehäuse (120) relativ zueinander zusammengefaltet sind, die Verlängerungsöffnung (1516) zu dem Passabschnitt (121) zeigt und das Befestigungselement (1311) betriebsfähig ist, um sich aus dem Aufnahmehohlraum (1514) heraus zu erstrecken und mit dem Passabschnitt (121) in Eingriff zu kommen.

5. Faltbare elektronische Vorrichtung (200) nach Anspruch 3 oder 4, wobei der erste Plattenkörper (1511) eine erste Plattenwand (15110) aufweist und jede der beiden Seitenplatten (1513) eine Plattenwand (15130) aufweist, wobei die Seitenwand (111) des Aufnahmemechanismus (150) die erste Plattenwand (15110) und die Plattenwände (15130) umfasst und der Seitenknopf (133) beweglich an der ersten Plattenwand (15110) des Aufnahmemechanismus (150) angeordnet ist.

6. Faltbare elektronische Vorrichtung (200) nach einem der Ansprüche 3-5, wobei der Seitenknopf (133) an einer der beiden Seitenplatten (1513) in der Breitenrichtung des ersten Gehäuses (110) verschiebbar angeordnet ist, wobei der Übertragungsabschnitt (132) ein Ende aufweist, das mit dem Seitenknopf (133) verbunden ist, und das andere Ende, das mit dem Eingriffsabschnitt (131) verbunden ist, und der Seitenknopf (133) so ausgelegt ist, dass er den Eingriffsabschnitt (131) antreibt, um sich durch Verschieben in der Breitenrichtung des ersten Gehäuses (110) vom Passabschnitt (121) zu trennen.

7. Faltbare elektronische Vorrichtung (200) nach Anspruch 1, wobei der erste Plattenkörper (1511) eine mit dem Aufnahmehohlraum (1514) kommunizierende Führungsbohrung (1517) definiert, wobei der Seitenknopf (133) einen Führungsblock (1331) und eine Knopfkappe (1332) umfasst, wobei der Führungsblock (1331) in der Längsrichtung des ersten Gehäuses (110) verschiebbar in der Führungsbohrung (1517) angeordnet ist und mit dem Verbindungssegment (1323) verbunden ist, wobei die Knopfkappe (1332) mit dem Führungsblock (1331) verbunden ist und außerhalb der Führungsbohrung (1517) gelegen ist, und wobei in der Längsrichtung des ersten Gehäuses (110) eine Länge der Führungsbohrung (1517) größer als eine Länge des Führungsblocks (1331) und kleiner als eine Länge der Knopfkappe (1332) ist.

8. Faltbare elektronische Vorrichtung (200) nach einem der Ansprüche 4-7, wobei das erste Gehäuse (110) eine Anschlagöffnung (1131) definiert, die sich in einer Dickenrichtung des ersten Gehäuses (110) an einer Stelle der zweiten Oberfläche (113) nahe der Verlängerungsöffnung (1516) erstreckt, wobei der Verriegelungsmechanismus (130) weiter eine Anschlagsanordnung (135) zur Begrenzung eines Bewegungswegs des Eingriffsabschnitts (131) umfasst, wobei die Anschlagsanordnung (135) einen Anschlagstift (1351) und ein elastisches Element (1352) umfasst, wobei das elastische Element (1352) ein Ende aufweist, das mit dem Boden der Anschlagöffnung (1131) verbunden ist, und das andere Ende, das mit dem Anschlagstift (1351) verbunden ist, wobei der Anschlagstift (1351) durch das zweite Gehäuse (120) in die Anschlagöffnung (1131) gedrückt wird, um das elastische Element (1352) zu verformen, wenn das erste Gehäuse (110) und das zweite Gehäuse (120) relativ zueinander zusammengefaltet sind, und der Anschlagstift (1351) durch eine Rückstellkraft des elastischen Elements (1352) so angetrieben wird, dass er sich aus der Anschlagöffnung (1131) heraus erstreckt, und um zu verhindern, dass sich der Eingriffsabschnitt (131) aus dem Aufnahmehohlraum (1514) heraus erstreckt, wenn das erste Gehäuse (110) und das zweite Gehäuse (120) relativ auseinandergeklappt sind.

9. Faltbare elektronische Vorrichtung (200) nach einem der Ansprüche 4-8, wobei die Gehäuseanordnung (100) weiter ein Rückstellelement (160) umfasst, das so ausgebildet ist, dass es den in den Aufnahmemechanismus (150) zurückgezogenen Eingriffsabschnitt (131) zurücksetzt, und wobei das Rückstellelement (160) mit dem Eingriffsabschnitt (131) und dem ersten Gehäuse (110) verbunden ist.

10. Faltbare elektronische Vorrichtung (200) nach Anspruch 9, wobei das erste Gehäuse (110) weiter einen Führungsabschnitt (114) umfasst, wobei der Führungsabschnitt (114) eine erste Führungsplatte (1141), eine zweite Führungsplatte (1142) und eine Begrenzungsplatte (1143) umfasst, wobei die erste Führungsplatte (1141) und die zweite Führungsplatte (1142) auf der zweiten Oberfläche (113) angeordnet sind und voneinander beabstandet sind, wobei die erste Führungsplatte (1141) und die zweite Führungsplatte (1142) jeweils an beiden Seiten der Verlängerungsöffnung (1516) angeordnet sind und gemeinsam eine Gleitrille (1144) definieren, wobei der Eingriffsabschnitt (131) in der Breitenrichtung des ersten Gehäuses (110) in der Gleitrille (1144) verschiebbar angeordnet ist, wobei die Begrenzungsplatte (1143) zwischen der ersten Führungsplatte (1141) und der zweiten Führungsplatte (1142) angeordnet ist und gegenüber der Verlängerungsöffnung (1516) in der Breitenrichtung des ersten Gehäuses (110) liegt, wobei das Rückstellelement (160) eine Feder ist, wobei die Feder ein Ende aufweist, das in der Breitenrichtung des ersten Gehäuses (110) mit dem Eingriffsabschnitt (131) verbunden ist, und das andere Ende in der Breitenrichtung des ersten Gehäuses (110) an der Begrenzungsplatte (1143) des Führungsabschnitts (114) anliegt, wobei die Feder zusammengedrückt wird, um Rückstellkraft zu erzeugen, wenn der Eingriffsabschnitt (131) angetrieben wird, um sich durch die Verlängerungsöffnung (1516) durch eine vom Seitenknopf (133) angewendete Kraft in den Aufnahmemechanismus (150) zurückzuziehen und die Rückstellkraft so ausgelegt ist, dass sie den Eingriffsabschnitt (131) antreibt, um sich durch die Verlängerungsöffnung (1516) aus dem Aufnahmemechanismus 150 heraus zu erstrecken, wenn die vom Seitenknopf (133) ausgeübte Kraft entfernt wird.

11. Faltbare elektronische Vorrichtung (200) nach Anspruch 9, wobei der erste Plattenkörper (1511) eine Rückstellöffnung definiert, wobei das Rückstellelement (160) eine Rückstellstange ist, wobei die Rückstellstange ein Ende aufweist, das in der Breitenrichtung des ersten Gehäuses (110) mit dem Eingriffsabschnitt (131) verbunden ist, und das andere Ende, das sich durch die Rückstellöffnung erstreckt und außerhalb der Rückstellöffnung freiliegt, wenn sich der Eingriffsabschnitt (131) in den Aufnahmemechanismus (150) zurückzieht, und wenn die Rückstellstange in der Breitenrichtung des ersten Gehäuses (110) einer äußeren Kraft in Richtung des zweiten Plattenkörpers (1512) ausgesetzt wird, sich das andere Ende der Rückstellstange in die Rückstellöffnung zurückzieht, um den Eingriffsabschnitt (131) anzutreiben, um sich aus dem Aufnahmehohlraum (1514) heraus zu erstrecken, sodass der Eingriffsabschnitt (131) mit dem Passabschnitt (121) in Eingriff kommt.

12. Faltbare elektronische Vorrichtung (200) nach einem der Ansprüche 3-5, wobei der Seitenknopf (133) beweglich am ersten Plattenkörper (1511) in der Breitenrichtung des ersten Gehäuses (110) angeordnet ist, der erste Plattenkörper (1511) eine Knopföffnung (1518) definiert, der Seitenknopf (133) in der Knopföffnung (1518) in der Breitenrichtung des ersten Gehäuses (110) beweglich angeordnet ist, der Übertragungsabschnitt (132) ein Zugseil (1321) und eine Verbindungsstange (1324) umfasst, die Verbindungsstange (1324) über einen Drehpunkt zwischen zwei Enden der Verbindungsstange (1324) drehbar mit dem ersten Gehäuse (110) verbunden ist, die Verbindungsstange (1324) ein Ende aufweist, das mit dem Seitenknopf (133) verbunden ist, und das andere Ende, das das Zugseil (1321) mit dem Eingriffsabschnitt (131) verbunden ist, und wobei der Seitenknopf (133) so ausgelegt ist, dass er als Reaktion auf eine Druckkraft auf den Seitenknopf (133) ein Ende der mit dem Seitenknopf (133) verbundenen Verbindungsstange (1324) so antreibt, dass es sich vom Knopfloch (1518) weg bewegt und das andere Ende der Verbindungsstange (1324), das mit dem Eingriffsabschnitt (131) verbunden ist, vom Verlängerungsloch (1516) weg bewegt, sodass das Zugseil (1321) den Eingriffsabschnitt (131) vom Passabschnitt (121) trennt.

## Revendications

1. Dispositif électronique pliable (200), comprenant un écran d'affichage (210) et un ensemble boîtier (100), dans lequel l'écran d'affichage (210) est placé séquentiellement sur une première surface (112), un mécanisme d'arbre (140) et une troisième surface (122) de l'ensemble boîtier (100), ou est placé séquentiellement sur une deuxième surface (113), le mécanisme d'arbre (140) et une quatrième surface (123) de l'ensemble boîtier (100), dans lequel ledit ensemble boîtier (100) comprend :
le premier boîtier (110) comprenant une paroi latérale (111), la première surface (112) et la deuxième surface (113) opposée à la première surface (112), la paroi latérale (111) étant reliée entre la première surface (112) et la deuxième surface (113) ;
un mécanisme de verrouillage (130) disposé au niveau du premier boîtier (110) et comprenant une partie d'engagement (131), une partie de transmission (132) et un bouton latéral (133), le bouton latéral (133) étant relié en entraînement à la partie d'engagement (131) via la partie de transmission (132) ; et
le second boîtier (120), dans lequel le second boîtier (120) est relié de manière rotative au premier boîtier (110) de sorte que le second boîtier (120) et le premier boîtier (110) soient sélectivement pliés ou dépliés l'un par rapport à l'autre, et le second boîtier (120) est doté d'une partie correspondante (121) correspondant à la partie d'engagement (131) ;
dans lequel lorsque le premier boîtier (110) et le second boîtier (120) sont pliés l'un par rapport à l'autre, la deuxième surface (113) est en contact avec le second boîtier (120) ;
dans lequel la partie d'engagement (131) est sélectivement engagée ou désengagée de la partie correspondante (121) par l'actionnement du bouton latéral (133) ; et
dans lequel le premier boîtier (110) comprend en outre un mécanisme de logement (150), le mécanisme de logement (150) est disposé à une extrémité de la deuxième surface (113) à l'écart d'une jonction entre le premier boîtier (110) et le second boîtier (120), et fait saillie vers une direction s'éloignant de la première surface (112), la partie d'engagement (131) est disposée au niveau du mécanisme de logement (150) et s'étend sélectivement hors du mécanisme de logement (150) ou se rétracte dans celui-ci, et la partie de transmission (132) est reçue dans le mécanisme de logement (150) ;
dans lequel le mécanisme de logement (150) comprend :
un premier corps de plaque (1511) s'étendant dans le sens de la longueur du premier boîtier (110) ;
un second corps de plaque (1512) disposé en face du premier corps de plaque (1511) dans le sens de la longueur du premier boîtier (110) ;
deux plaques latérales (1513) disposées face à face dans le sens de la largeur du premier boîtier (110) et reliées entre le premier corps de plaque (1511) et le second corps de plaque (1512) ;
une plaque de recouvrement (1515) recouvrant le premier corps de plaque (1511), le second corps de plaque (1512) et les deux plaques latérales (1513),
une cavité de logement (1514) définie de manière coopérative par le premier corps de plaque (1511), le second corps de plaque (1512), les deux plaques latérales (1513), la plaque de recouvrement (1515) et la deuxième surface (113), la partie de transmission (132) étant disposée dans la cavité de logement (1514), dans lequel la partie de transmission (132) est disposée dans la cavité de logement (1514) ;
dans lequel le bouton latéral (133) est disposé de manière coulissante sur le premier corps de plaque (1511) dans le sens de la longueur du premier boîtier (110), la partie de transmission (132) présente une extrémité reliée au bouton latéral (133) et l'autre extrémité reliée à la partie d'engagement (131), et le bouton latéral (133) est configuré pour entraîner la partie d'engagement (131) à se désengager de la partie correspondante (121) par coulissement dans le sens de la longueur du premier boîtier (110)
dans lequel le mécanisme de verrouillage (130) comprend en outre une partie de guidage (1134) disposée dans la cavité de logement (1514), la partie de transmission (132) comprend une corde de traction (1321) dotée d'un segment de traction (1322) et d'un segment de liaison (1323), le segment de traction (1322) présente une extrémité reliée à une extrémité du segment de liaison (1323) et l'autre extrémité reliée au bouton latéral (133), le segment de liaison (1323) présente l'autre extrémité reliée à la partie d'engagement (131), la corde de traction (1321) est enroulée autour de la partie de guidage (134) de sorte que l'autre extrémité du segment de traction (1322) reliée au bouton latéral (133) soit perpendiculaire à l'autre extrémité du segment de liaison (1323) reliée à la partie d'engagement (131), et lorsque le bouton latéral (133) coulisse dans le sens de la longueur du premier boîtier (110), une force d'action dans le sens e la longueur du premier boîtier (110) sur le segment de liaison (1323) est convertie en une force de traction dans le sens de la largeur du premier boîtier (110) sur le segment de traction (1322) pour tirer la partie d'engagement (131) afin qu'elle se rétracte dans la cavité de logement (1514) de sorte que la partie d'engagement (131) soit désengagée de la partie correspondante (121).

2. Dispositif électronique pliable (200) selon la revendication 1, dans lequel le mécanisme de logement (150) est aligné sur le second boîtier (120) lorsque le second boîtier (120) et le premier boîtier (110) sont pliés l'un par rapport à l'autre.

3. Dispositif électronique pliable (200) selon la revendication 2, dans lequel la partie d'engagement (131) est disposée de manière coulissante au niveau du second corps de plaque (1512) dans le sens de la largeur du premier boîtier (110), et le second boîtier (120) est adjacent au second corps de plaque (1512) lorsque le premier boîtier (110) et le second boîtier (120) sont pliés l'un par rapport à l'autre ;
dans lequel la plaque de recouvrement (1515) est alignée sur une surface extérieure du second boîtier (120) lorsque le premier boîtier (110) et le second boîtier (120) sont pliés l'un par rapport à l'autre.

4. Dispositif électronique pliable (200) selon la revendication 3, dans lequel le second corps de plaque (1512) définit un trou d'extension (1516) communiquant avec la cavité de logement (1514), la partie d'engagement (131) comprend une fixation (1311) et un bloc coulissant (1312), le bloc coulissant (1312) présente une extrémité reliée à la fixation (1311) et l'autre extrémité reliée au bouton latéral (133) via la partie de transmission (132), le bloc coulissant (1312) peut coulisser à travers le trou d'extension (1516) dans le sens de la largeur du premier boîtier (110), et lorsque le premier boîtier (110) et le second boîtier (120) sont pliés l'un par rapport à l'autre, le trou d'extension (1516) fait face à la partie correspondante (121) et la fixation (1311) peut s'étendre hors de la cavité de logement (1514) pour s'engager avec la partie correspondante (121).

5. Dispositif électronique pliable (200) selon la revendication 3 ou 4, dans lequel le premier corps de plaque (1511) présente une première paroi de plaque (15110), et chacune des deux plaques latérales (1513) présente une paroi de plaque (15130), la paroi latérale (111) du mécanisme de logement (150) comprend la première paroi de plaque (15110) et les parois de plaque (15130), et le bouton latéral (133) est disposé de manière mobile au niveau de la première paroi de plaque (15110) du mécanisme de logement (150).

6. Dispositif électronique pliable (200) selon l'une quelconque des revendications 3-5, dans lequel le bouton latéral (133) est disposé de manière coulissante au niveau de l'une des deux plaques latérales (1513) dans le sens de la largeur du premier boîtier (110), la partie de transmission (132) présente une extrémité reliée au bouton latéral (133) et l'autre extrémité reliée à la partie d'engagement (131), et le bouton latéral (133) est configuré pour entraîner la partie d'engagement (131) à se désengager de la partie correspondante (121) en la faisant coulisser dans le sens de la largeur du premier boîtier (110).

7. Dispositif électronique pliable (200) selon la revendication 1, dans lequel le premier corps de plaque (1511) définit un trou de guidage (1517) communiquant avec la cavité de logement (1514), le bouton latéral (133) comprend un bloc de guidage (1331) et un capuchon de bouton (1332), le bloc de guidage (1331) est disposé de manière coulissante dans le trou de guidage (1517) dans le sens de la longueur du premier boîtier (110) et relié au segment de liaison (1323), le capuchon de bouton (1332) est relié au bloc de guidage (1331) et est situé à l'extérieur du trou de guidage (1517), et dans lequel dans le sens de la longueur du premier boîtier (110), la longueur du trou de guidage (1517) est supérieure à la longueur du bloc de guidage (1331) et inférieure à la longueur du capuchon de bouton (1332).

8. Dispositif électronique pliable (200) selon l'une quelconque des revendications 4-7, dans lequel le premier boîtier (110) définit un trou d'arrêt (1131) s'étendant dans le sens de l'épaisseur du premier boîtier (110) sur une position de la deuxième surface (113) proche du trou d'extension (1516), le mécanisme de verrouillage (130) comprend en outre un ensemble d'arrêt (135) pour limiter un trajet de mouvement de la partie d'engagement (131), l'ensemble d'arrêt (135) comprend un montant d'arrêt (1351) et un élément élastique (1352), l'élément élastique (1352) présente une extrémité reliée au fond du trou d'arrêt (1131) et l'autre extrémité reliée au montant d'arrêt (1351), dans lequel le montant d'arrêt (1351) est pressé dans le trou d'arrêt (1131) par le second boîtier (120) pour déformer l'élément élastique (1352) lorsque le premier boîtier (110) et le second boîtier (120) sont pliés l'un par rapport à l'autre, et le montant d'arrêt (1351) est entraîné par une force de rappel de l'élément élastique (1352) pour s'étendre hors du trou d'arrêt (1131) afin d'empêcher la partie d'engagement (131) de s'étendre hors de la cavité de logement (1514) lorsque le premier boîtier (110) et le second boîtier (120) sont dépliés l'un par rapport à l'autre.

9. Dispositif électronique pliable (200) selon l'une quelconque des revendications 4-8, dans lequel l'ensemble boîtier (100) comprend en outre un élément de réinitialisation (160) configuré pour réinitialiser la partie d'engagement (131) rétractée dans le mécanisme de logement (150), et l'élément de réinitialisation (160) est relié à la partie d'engagement (131) et au premier boîtier (110).

10. Dispositif électronique pliable (200) selon la revendication 9, dans lequel le premier boîtier (110) comprend en outre une partie de guidage (114), la partie de guidage (114) comprend une première plaque de guidage (1141), une seconde plaque de guidage (1142) et une plaque limite (1143), la première plaque de guidage (1141) et la seconde plaque de guidage (1142) sont disposées sur la deuxième surface (113) et espacées l'une de l'autre, la première plaque de guidage (1141) et la seconde plaque de guidage (1142) sont disposées respectivement de part et d'autre du trou d'extension (1516) et définissent conjointement une rainure de glissement (1144), la partie d'engagement (131) est disposée de manière coulissante dans la rainure de glissement (1144) dans le sens de la largeur du premier boîtier (110), la plaque limite (1143) est disposée entre la première plaque de guidage (1141) et la seconde plaque de guidage (1142) et est opposée au trou d'extension (1516) dans le sens de la largeur du premier boîtier (110), l'élément de réinitialisation (160) est un ressort, le ressort présente une extrémité reliée à la partie d'engagement (131) dans le sens de la largeur du premier boîtier (110) et l'autre extrémité appuyée contre la plaque de limite (1143) de la partie de guidage (114) dans le sens de la largeur du premier boîtier (110) et le ressort est comprimé pour générer une force de rappel lorsque la partie d'engagement (131) est entraînée à se rétracter dans le mécanisme de logement (150) à travers le trou d'extension (1516) par une force d'action appliquée par le bouton latéral (133) et la force de rappel est conçue pour entraîner la partie d'engagement (131) à s'étendre hors du mécanisme de logement (150) à travers le trou d'extension (1516) lorsque la force d'action appliquée par le bouton latéral (133) est supprimée.

11. Dispositif électronique pliable (200) selon la revendication 9, dans lequel le premier corps de plaque (1511) définit un trou de réinitialisation, l'élément de réinitialisation (160) est une tige de réinitialisation, la tige de réinitialisation présente une extrémité reliée à la partie d'engagement (131) dans le sens de la largeur du premier boîtier (110) et l'autre extrémité qui traverse le trou de réinitialisation et est exposée à l'extérieur du trou de réinitialisation lorsque la partie d'engagement (131) se rétracte dans le mécanisme de logement (150), et lorsque la tige de réinitialisation est soumise à une force externe vers le second corps de plaque (1512) dans le sens de la largeur du premier boîtier (110), l'autre extrémité de la tige de réinitialisation se rétracte dans le trou de réinitialisation pour entraîner la partie d'engagement (131) à s'étendre hors de la cavité d'accommodation (1514) de sorte que la partie d'engagement (131) soit engagée avec la partie correspondante (121).

12. Dispositif électronique pliable (200) selon l'une quelconque des revendications 3-5, dans lequel le bouton latéral (133) est disposé de manière mobile au niveau du premier corps de plaque (1511) dans le sens de la largeur du premier boîtier (110), le premier corps de plaque (1511) définit un orifice pour bouton (1518), le bouton latéral (133) est disposé de manière mobile dans l'orifice pour bouton (1518) dans le sens de la largeur du premier boîtier (110), la partie de transmission (132) comprend une corde de traction (1321) et une bielle (1324), la bielle (1324) est reliée de manière rotative au premier boîtier (110) via un pivot qui est situé entre ses deux extrémités de la bielle (1324), la bielle (1324) présente une extrémité reliée au bouton latéral (133) et l'autre extrémité à la partie d'engagement (131) via la corde de traction (1321), et le bouton latéral (133) est configuré pour entraîner, en réponse à une force de pression sur le bouton latéral (133), une extrémité de la bielle (1324) reliée au bouton latéral (133) à s'éloigner de l'orifice pour bouton (1518) et l'autre extrémité de la bielle (1324) reliée à la partie d'engagement (131) à s'éloigner du trou d'extension (1516) de sorte que la corde de traction (1321) tire la partie d'engagement (131) pour se désengager de la partie correspondante (121).
